(19) Europäisches Patentamt
European Patent Office
Office européen des brevets

(11) **EP 4 238 635 A1**

(12) **EUROPEAN PATENT APPLICATION**
published in accordance with Art. 153(4) EPC

(43) Date of publication:
**06.09.2023 Bulletin 2023/36**

(21) Application number: **21886278.7**

(22) Date of filing: **27.10.2021**

(51) International Patent Classification (IPC):
**B01D 63/14** (2006.01)    **B01D 39/16** (2006.01)
**B01D 46/52** (2006.01)    **B01D 63/00** (2006.01)
**B01D 71/36** (2006.01)

(52) Cooperative Patent Classification (CPC):
**B01D 39/16; B01D 46/52; B01D 63/00;**
**B01D 63/14; B01D 71/36**

(86) International application number:
**PCT/JP2021/039689**

(87) International publication number:
**WO 2022/092161 (05.05.2022 Gazette 2022/18)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **27.10.2020  JP 2020179754**

(71) Applicant: **NITTO DENKO CORPORATION**
**Ibaraki-shi**
**Osaka 567-8680 (JP)**

(72) Inventors:
• **MASAKI, Shunsuke**
**Ibaraki-shi, Osaka 567-8680 (JP)**
• **IKEMURA, Yusuke**
**Ibaraki-shi, Osaka 567-8680 (JP)**
• **MORI, Masaaki**
**Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

(54) **FILTER PLEAT PACK, AND AIR FILTER UNIT**

(57)     A provided filter pleat pack includes an air filter medium including: a first porous fluorine resin membrane; and a first air-permeable supporting layer. The first air-permeable supporting layer is placed on a downstream side in a direction of an air flow that passes through the filter medium with respect to the first porous fluorine resin membrane, and includes a ventilation inhibiting portion in at least one end portion in a width direction, the ventilation inhibiting portion extending along the at least one end portion, the ventilation inhibiting portion being configured to inhibit ventilation in the width direction through the first air-permeable supporting layer. The ventilation inhibiting portion is in contact with the first porous fluorine resin membrane. This filter pleat pack is suitable for reducing a decrease in the collection efficiency of an air filter unit even when a gap between a lateral surface of the pleat pack and a frame is sealed by applying a simplified seal configured to cover the gap from the downstream side only.

FIG.1A

**(Cont. next page)**

12

2

23 21 22

L
Upstream side

25 (25B)

3 (3A)

2

H

$H_0$

C C

Downstream side

25 (25A)

## FIG.1B

L

24 3 3 24

13 (13A)

W

91

15 15

26A 26B

23 21 22 22 21 23

2 2

## FIG.1C

**Description**

TECHNICAL FIELD

The present invention relates to a filter pleat pack including an air filter medium including a porous fluorine resin membrane and an air filter unit including an air filter medium including a porous fluorine resin membrane.

BACKGROUND ART

Air filter mediums including porous fluorine resin membranes have a high collection capability to collect particles such as dusts. Handleability, replaceability, and the like can be improved by integrating an air filter medium with a frame to make an air filter unit. By folding the air filter medium into pleats to form a filter pleat pack before the integration, the filtration area of the resulting air filter unit with respect to the ventilation area (the area of an opening of a frame) thereof can be improved. Patent Literature 1 discloses one exemplary filter pleat pack.

CITATION LIST

Patent Literature

Patent Literature 1: JP 2014-198313 A

SUMMARY OF INVENTION

Technical Problem

In integration of a filter pleat pack with a frame, a gap between a lateral surface of the filter pleat pack and the frame is generally sealed by a sealing material such as an adhesive, a resin, or a rubber so as to reduce a leak of particles to be collected through the gap. As for a lateral surface of the filter pleat pack in a width direction (a direction in which a pleat line of the air filter medium extends), the above gap is sealed in such a manner that an entire exposed portion (end face) which is part of the air filter medium folded into pleats and which is exposed to the above gap is covered. To reduce cost of manufacturing the air filter unit, it is conceivable that the above gap is sealed in such a manner that the end face of the air filter medium is only partially covered. However, studies by the present inventors have revealed that an air filter unit in which a gap is sealed by covering the gap from a downstream side only has a decreased collection efficiency.

The present invention aims to provide a filter pleat pack suitable for reducing a decrease in the collection efficiency of an air filter unit even when a gap between a lateral surface of the filter pleat pack and a frame is sealed by applying a simplified seal configured to cover the gap from the downstream side only.

Solution to Problem

The present invention provides a filter pleat pack including an air filter medium folded into pleats, wherein

the air filter medium includes a first porous fluorine resin membrane and a first air-permeable supporting layer,
the first air-permeable supporting layer includes a ventilation inhibiting portion in at least one of two end portions in a width direction, the ventilation inhibiting portion extending along the at least one end portion, the ventilation inhibiting portion being configured to inhibit ventilation in the width direction through the first air-permeable supporting layer, the width direction being a direction in which a pleat line of the air filter medium folded into pleats extends, and
the ventilation inhibiting portion is in contact with the first porous fluorine resin membrane.

The first air-permeable supporting layer may be placed on a downstream side in a direction of an air flow M that passes through the air filter medium with respect to the first porous fluorine resin membrane.

In another aspect, the present invention provides an air filter unit including:

a filter pleat pack; and
a frame supporting the filter pleat pack, wherein
the filter pleat pack is the filter pleat pack of the present invention.

Advantageous Effects of Invention

According to the present invention, a filter pleat pack suitable for reducing a decrease in the collection efficiency of an air filter unit even when a gap between a lateral surface of the filter pleat pack and a frame is sealed by applying a simplified seal configured to cover the gap from the downstream side only can be obtained.

BRIEF DESCRIPTION OF DRAWINGS

FIG. 1A is a perspective view schematically showing one example of the filter pleat pack of the present invention.
FIG. 1B shows a plan view of a portion of one lateral surface of the filter pleat pack of FIG. 1A in a width direction and a partially enlarged view of a region including an air filter medium and a ventilation inhibiting portion, the portion being viewed along the width direction.
FIG. 1C is a cross-sectional view showing a cross-section C-C of the filter pleat pack of FIG. 1B.
FIG. 2 is a schematic diagram for illustrating that a side leak can occur without a ventilation inhibiting portion.
FIG. 3 is a schematic diagram for illustrating reduction of a side leak in the filter pleat pack of the present invention including the ventilation inhibiting portion.
FIG. 4A shows a plan view schematically showing another example of the filter pleat pack of the present invention and a partially enlarged view showing a region including the air filter medium and the ventilation inhibiting portion.
FIG. 4B shows a plan view schematically showing another example of the filter pleat pack of the present invention and a partially enlarged view showing a region including the air filter medium and the ventilation inhibiting portion.
FIG. 5A is a perspective view schematically showing another example of the filter pleat pack of the present invention.
FIG. 5B shows a plan view of a portion of one lateral surface of the filter pleat pack of FIG. 5A in a width direction and a partially enlarged view of a region including an air filter medium and the ventilation inhibiting portion, the portion being viewed along the width direction
FIG. 5C is a cross-sectional view showing a cross-section C-C of the filter pleat pack of FIG. 5B.
FIG. 6 is a schematic diagram for illustrating a vertex angle $\theta_1$ of a recessed portion that a side of a strip-shaped body that the filter pleat pack of the present invention can have can have.
FIG. 7 is a schematic diagram for illustrating a contact angle $\theta_2$ between a strip-shaped body that the filter pleat pack of the present invention can have and an air filter medium on which the strip-shaped body is placed.
FIG. 8 is a plan view schematically showing another example of the filter pleat pack of the present invention and a partially enlarged view of a region including the air filter medium and the ventilation inhibiting portion.
FIG. 9 is a schematic diagram showing one example of a method for manufacturing the filter pleat pack of the present invention.
FIG. 10 is a schematic diagram showing another example of the method for manufacturing the filter pleat pack of the present invention.
FIG. 11 is a schematic diagram showing another example of the method for manufacturing the filter pleat pack of the present invention.
FIG. 12 is a schematic diagram showing another example of the method for manufacturing the filter pleat pack of the present invention.
FIG. 13 is a schematic cross-sectional view for illustrating one example of a strip-shaped body that the filter pleat pack of the present invention can have.
FIG. 14 is a cross-sectional view schematically showing one example of the air filter medium included in the filter pleat pack of the present invention.
FIG. 15 is a cross-sectional view schematically showing another example of the air filter medium included in the filter pleat pack of the present invention.
FIG. 16 is a cross-sectional view schematically showing another example of the air filter medium included in the filter pleat pack of the present invention.
FIG. 17A is a plan view schematically showing one example of the air filter unit of the present invention.
FIG. 17B is a cross-sectional view showing a cross-section B-B of the air filter unit of FIG. 17A.
FIG. 18 is a scanning electron microscope (SEM) image of a strip-shaped body of a filter pleat pack produced in Example 1 and its vicinity.
FIG. 19 is a SEM image of a strip-shaped body of a filter pleat pack produced in Example 2 and its vicinity.
FIG. 20A is a SEM image of a strip-shaped body of a filter pleat pack produced in Example 3 and its vicinity.
FIG. 20B is an enlarged image of a portion where the strip-shaped body and the air filter medium in the observation image of FIG. 20A are in contact with each other.
FIG. 21A is a SEM image of a strip-shaped body of a filter pleat pack produced in Comparative Example 1 and its vicinity.

FIG. 21B is an enlarged image of a portion where the strip-shaped body and the air filter medium in the observation image of FIG. 21A are in contact with each other.

FIG. 22A is a SEM image of a strip-shaped body of a filter pleat pack produced in Comparative Example 2 and its vicinity.

FIG. 22B is an enlarged image of a portion where the strip-shaped body and the air filter medium in the observation image of FIG. 22A are in contact with each other.

DESCRIPTION OF EMBODIMENTS

Hereinafter, embodiments of the present invention will be described with reference to the drawings. The present invention is not limited to the following embodiments.

[Filter pleat pack]

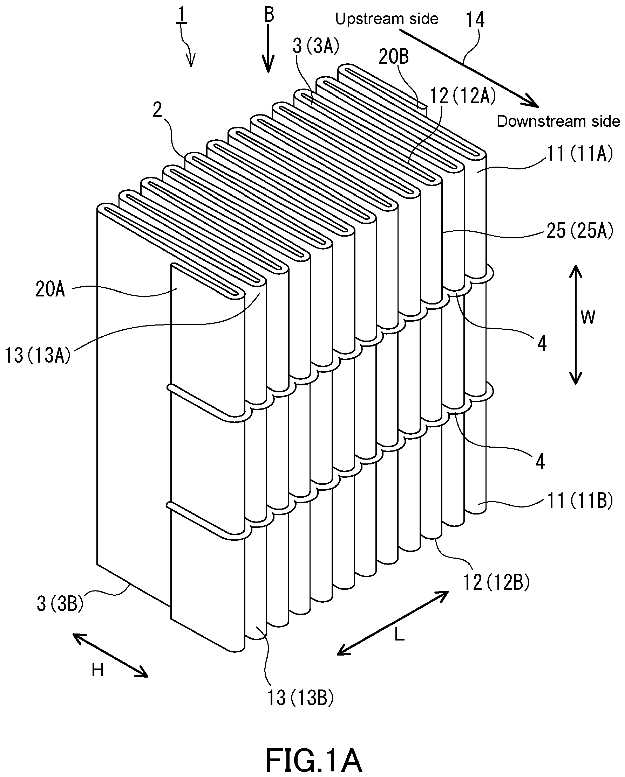

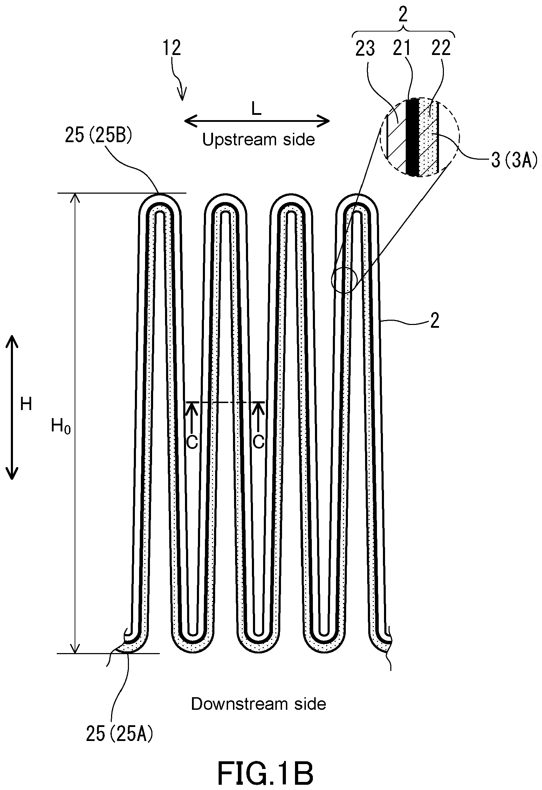

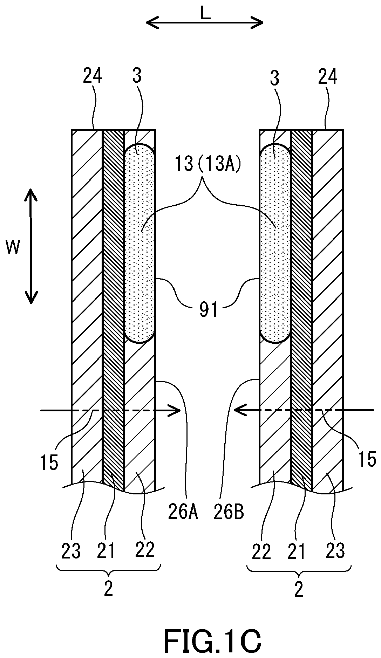

FIGS. 1A to 1C show one example of the filter pleat pack of the present embodiment. FIG. 1B shows a plan view of a portion of a lateral surface 12 (12A) of a filter pleat pack 1 of FIG. 1A and a partially enlarged view of a region being part of the lateral surface 12 and including an air filter medium 2 and a ventilation inhibiting portion 3 (3A), the portion being viewed along a width direction W (viewed in a direction B in FIG. 1A), the lateral surface 12 (12A) being closer to one end portion 11 (11A) in the width direction W. FIG. 1C is a cross-sectional view showing a cross-section C-C of the filter pleat pack 1 of FIG. 1B. FIG. 1B shows a face of the filter pleat pack 1, the face extending in a length direction L and a height direction H. FIG. 1C shows a cross-section of the filter pleat pack 1 along a face extending in the width direction W and the length direction L. Herein, the width direction W is a direction in which a pleat line 25 of the air filter medium 2 folded into pleats extends. The length direction L is orthogonal to the width direction W and a direction in which an air flow (air flow P) 14 that passes through the filter pleat pack 1 flows (hereinafter referred to as "direction of the air flow 14"). The height direction H is orthogonal to both the width direction W and the length direction L, and is the direction of the air flow 14. The cross-section shown in FIG. 1C is also a cross-section viewed along the direction of the air flow 14. In FIG. 1B, FIG. 1C, and subsequent figures, portions corresponding to the ventilation inhibiting portion 3 have the same dot pattern for clarity of illustration.

The filter pleat pack 1 of FIGS. 1A to 1C includes the air filter medium 2 folded into pleats. The air filter medium 2 includes a first porous fluorine resin membrane 21, a first air-permeable supporting layer 22, and a second air-permeable supporting layer 23. The first porous fluorine resin membrane 21 is sandwiched between the first air-permeable supporting layer 22 and the second air-permeable supporting layer 23. The first air-permeable supporting layer 22 is placed on one side of the first porous fluorine resin membrane 21. More specifically, the first air-permeable supporting layer 22 is placed on a downstream side in a direction of an air flow (air flow M) 15 that passes through the air filter medium 2 with respect to the first porous fluorine resin membrane 21.

The first air-permeable supporting layer 22 includes the ventilation inhibiting portion 3 (3A, 3B) in each of two end portions 13 (13A, 13B) in the width direction W. The ventilation inhibiting portion 3 extends along the end portion 13 and inhibits ventilation in the width direction W through the first air-permeable supporting layer. The ventilation inhibiting portion 3 is part of the first air-permeable supporting layer 22. The ventilation inhibiting portion 3 is located on the above one side of the first porous fluorine resin membrane 21. More specifically, the ventilation inhibiting portion 3 is located on the downstream side in the directions of the air flows 14 and 15 with respect to the first porous fluorine resin membrane 21. The ventilation inhibiting portion 3 is in contact with the first porous fluorine resin membrane 21 (in other words, extends within the first air-permeable supporting layer 22 to be in contact with the first porous fluorine resin membrane 21).

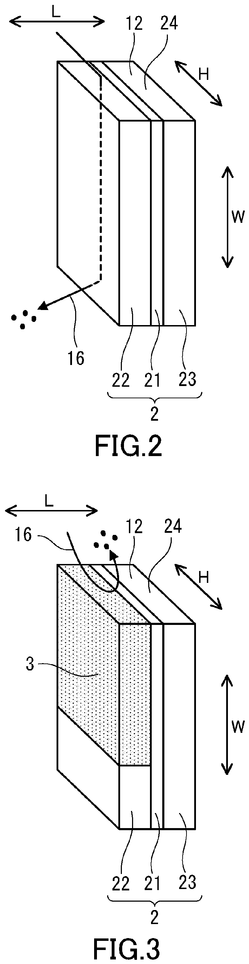

As shown in FIG. 2, without the ventilation inhibiting portion 3, a side leak 16 can occur which passes through an end face 24 of the air filter medium 2 and then through the inside of the first air-permeable supporting layer 22 to the downstream side in the direction of the air flow 14 or 15. In the air filter medium 2 integrated with a frame, the end face 24 serves as an exposed portion exposed to a gap (not sealed) between the lateral surface 12 and the frame. The side leak 16 is attributable to a higher air permeability and a lower collection efficiency of the first air-permeable supporting layer 22 than those of the first porous fluorine resin membrane 21. According to studies by the present inventors, the side leak 16 causes, as described above, a decrease in collection efficiency. On the other hand, as shown in FIG. 3, the ventilation inhibiting portion 3 reduces the side leak 16 through the first air-permeable supporting layer 22 via the end face 24 that serves as the exposed portion exposed to the above gap. Because of this, even when sealing is performed without covering the entire end face 24 of the air filter medium 2 for integration of the filter pleat pack 1 with a frame, a decrease of the collection efficiency of the resulting air filter unit is reduced.

The ventilation inhibiting portion 3 of FIGS. 1A to 1C as a whole is located in the end portion 13. However, at least a portion of the ventilation inhibiting portion 3 may be located in the end portion 13. Herein, the end portion 13 of the first air-permeable supporting layer 22 in the width direction W refers to a strip-shaped region extending from the end face 24 toward a center in the width direction W. Although depending on the size of the air filter medium 2 (the size of the filter pleat pack 1), the width of the region (the width of the end portion 13) is, for example, 2 mm or more, and may be 5 mm or more, 10 mm or more, 20 mm or more, 30 mm or more, or even 40 mm or more. The upper limit of the width of the end portion 13 is, for example, 10% or less of the width of the air filter medium 2.

Likewise, the end portion 11 of the filter pleat pack 1 in the width direction W herein refers to a strip-shaped region extending from the lateral surface 12 toward a center in the width direction W. Although depending on the size of the filter pleat pack 1, the width of the region (the width of the end portion 11) is, for example, 2 mm or more, and may be 5 mm or more, 10 mm or more, 20 mm or more, 30 mm or more, or even 40 mm or more. The upper limit of the width of the end portion 11 is, for example, 10% or less of the width of the filter pleat pack 1.

The ventilation inhibiting portion 3 of FIGS. 1A to 1C reaches a surface (first surface) 91 of the first air-permeable supporting layer 22, the surface being farther from the first porous fluorine resin membrane 21. In other words, the ventilation inhibiting portion 3 extends within the first air-permeable supporting layer 22 from the surface 91 to reach the first porous fluorine resin membrane 21. In this embodiment, the side leak 16 can be more reliably reduced.

The ventilation inhibiting portion 3 of FIGS. 1A to 1C extends along the end portion 13 from one end portion 20A of the first air-permeable supporting layer 22 in the length direction L to the other end portion 20B. In this embodiment, the side leak 16 can be more reliably reduced.

The first air-permeable supporting layer 22 of FIGS. 1A to 1C includes the ventilation inhibiting portions 3A and 3B, respectively, in the two end portions 13A and 13B in the width direction W. The first air-permeable supporting layer 22 is required to include the ventilation inhibiting portion 3 in at least one of the end portions 13 in the width direction W. In integration of an air filter unit into a frame, it is preferred that the side leak 16 through the end portion 11 which is part of the filter pleat pack 1 and in which the ventilation inhibiting portion 3 is not present be reduced by a known technique, such as sealing a gap to cover the entire end face 24 of the air filter medium 2. The same applies to the end portions of the filter pleat pack 1 in the length direction L. In the case of the filter pleat pack 1 having a cylindrical shape, the two end portions in the length direction L may be joined to each other.

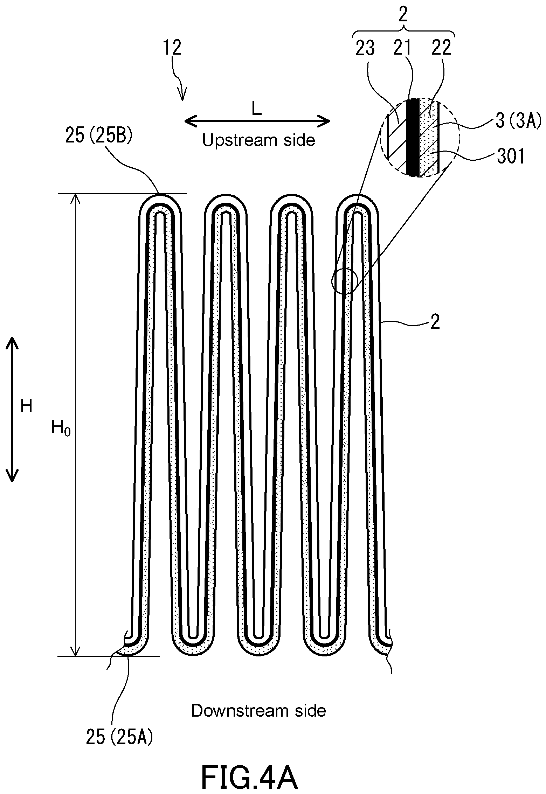

In the above at least one end portion 13, a first resin may permeate the first air-permeable supporting layer 22, and the ventilation inhibiting portion 3 may include a portion 301 of the first air-permeable supporting layer 22, the portion being permeated with the first resin (refer to FIG. 4A). In the portion 301, due to the permeated first resin, an air-permeable path in the first air-permeable supporting layer 22 shrinks and, depending on the degree of the permeation, closes.

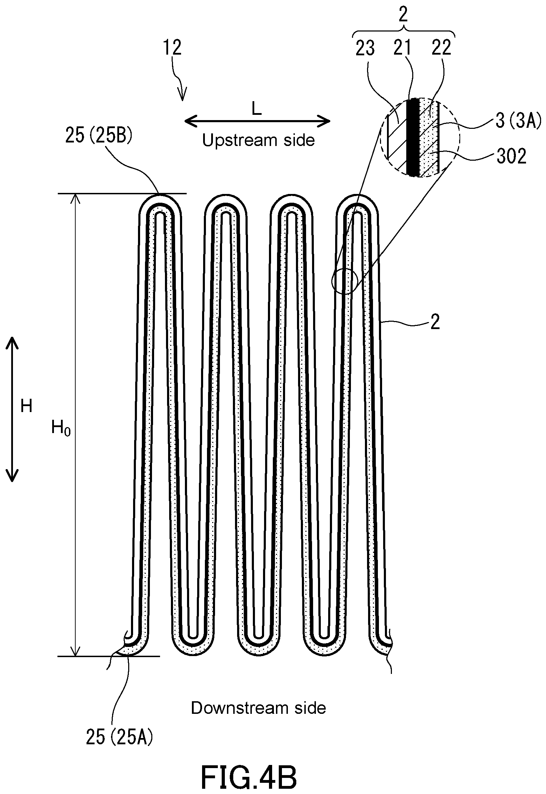

The first air-permeable supporting layer 22 may include a thermally fused portion 302 in the above at least one end portion 13, and the ventilation inhibiting portion 3 may include the thermally fused portion 302 of the first air-permeable supporting layer 22 (refer to FIG. 4B). In the portion 302, due to the fusion of a material, such as a fibrous material, of the first air-permeable supporting layer 22 by heat, the air-permeable path in the first air-permeable supporting layer 22 shrinks and, depending on the degree of the fusion, closes.

The portions 301 and 302 may extend within the first air-permeable supporting layer 22 from the surface 91 to reach the first porous fluorine resin membrane 21.

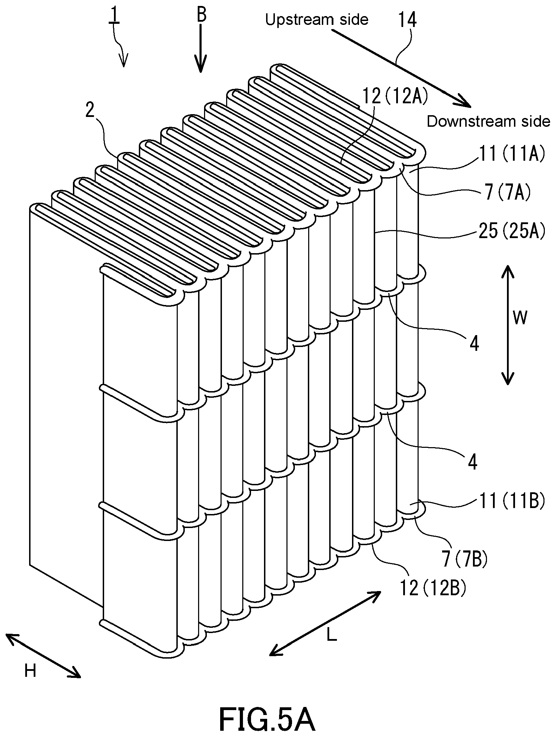

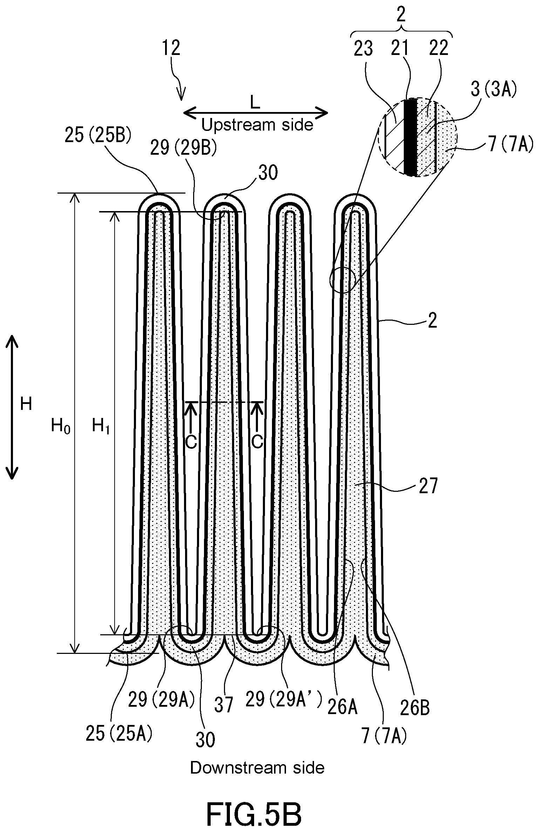

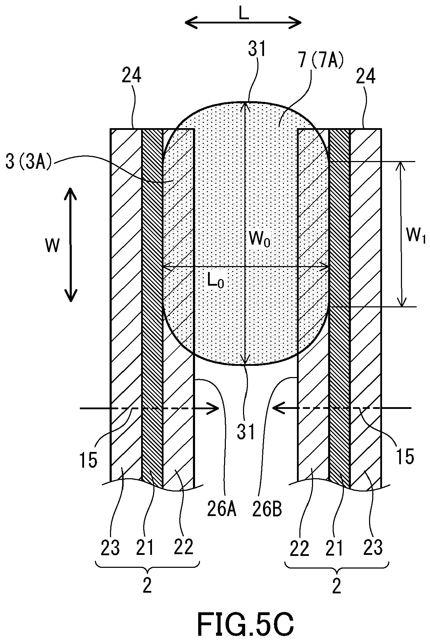

FIGS. 5A to 5C show another example of the filter pleat pack 1 of the present embodiment. FIG. 5B shows a plan view of a portion of the lateral surface 12 (12A) of the filter pleat pack 1 of FIG. 5A and a partially enlarged view of a region being part of the lateral surface 12 and including the air filter medium 2 and the ventilation inhibiting portion 3, the portion being viewed along the width direction W, the lateral surface 12 being closer to the one end portion 11 (11A) in the width direction W. FIG. 5C is a cross-sectional view showing a cross-section C-C of the filter pleat pack 1 of FIG. 5B. The filter pleat pack 1 of FIGS. 5A to 5C includes, in each of the two end portions 11 (11A, 11B) in the width direction W, a strip-shaped body 7 (7A, 7B) extending along the end portion 11. The strip-shaped body 7 includes the first resin. The strip-shaped body 7 is placed on a surface (second surface) of the air filter medium 2 folded into pleats, the surface being closer to the first air-permeable supporting layer 22. More specifically, the strip-shaped body 7 is placed on the surface of the air filter medium 2 on the downstream side in the direction of the air flow 15. Moreover, the strip-shaped body 7 permeates the first air-permeable supporting layer 22 from the second surface to reach the first porous fluorine resin membrane 21 (refer to FIGS. 5B and 5C). The ventilation inhibiting portion 3 includes a portion being part of the first air-permeable supporting layer 22 and permeated with the strip-shaped body 7. Furthermore, the strip-shaped body 7 needs to have a strip shape when viewed along the direction of the air flow 14. The strip shape includes a string shape.

The strip-shaped body 7 may be a bead of the filter pleat pack 1. In a filter pleat pack including an air filter medium folded into pleats, a bead is placed in general to maintain the shape (the pleat shape) of the folded air filter medium. The bead is commonly placed on a surface of the air filter medium to extend along a direction intersecting with a pleat line of the folded air filter medium.

The strip-shaped body 7 of FIGS. 5A to 5C is placed such that the entire strip-shaped body 7 is in contact with the end portion 11. The strip-shaped body 7 needs to be placed at least partially in contact with the end portion 11. Moreover, a portion of the strip-shaped body 7 of FIGS. 5A to 5C protrudes outward (away from the above-described center) in the width direction W from the end face 24 of the air filter medium 2 on the end portion 11 side when viewed along the direction of the air flow 14. However, the strip-shaped body 7 does not need to protrude outward from the end face 24, and the entire strip-shaped body 7 may be, for example, located on an internal side (toward the above-described center) in the width direction W with respect to the end face 24.

The filter pleat pack 1 of FIGS. 5A to 5C includes the strip-shaped bodies 7A and 7B in the two end portions 11A and 11B in the width direction W, respectively. The filter pleat pack 1 may have the strip-shaped body 7 in the at least one of the end portions 11 in the width direction W.

The strip-shaped body 7 of FIGS. 5A to 5C is placed on the surface of the air filter medium 2 from the pleat line 25 (25A) on one side of the filter medium 2 to the pleat line 25 (25B) on the other side. More specifically, the strip-shaped body 7 of FIGS. 5A to 5C is placed on the surface of the air filter medium 2 from the pleat line 25 (25A) of the filter medium 2 on the downstream side in the direction of the air flow 14 to the pleat line 25 (25B) on the upstream side (refer to FIG. 5B). In this embodiment, the side leak 16 can be more reliably reduced.

When viewed toward the face extending in the length direction L and the height direction H, in other words, when viewed in a direction perpendicular to the lateral surface 12, the strip-shaped body 7 of FIGS. 5A to 5C is placed on the surface of the air filter medium 2 to fill a region 27 between faces of the air filter medium 2 from a valley fold 29 (29B) on the above other side to 90% or more of an inter-valley-fold height $H_1$, the faces facing to each other on the above one side. More specifically, when viewed toward the face extending in the length direction L and the height direction H, in other words, when viewed in the direction perpendicular to the lateral surface 12, the strip-shaped body 7 of FIGS. 5A to 5C is placed on the surface of the air filter medium 2 to fill the region 27 between faces of the air filter medium 2 from the valley fold 29 (29B) on the upstream side to 90% or more of the inter-valley-fold height $H_1$, the faces facing to each other on the downstream side in the directions of the air flows 14 and 15 (refer to FIG. 5B). In this embodiment, the side leak 16 can be more reliably reduced. When viewed in the direction perpendicular to the lateral surface 12, the strip-shaped body 7 may be placed on the surface of the filter medium 2 to fill the region 27 from the valley fold 29B on the above other side (e.g., the upstream side, as shown in the example of FIGS. 5A to 5C) to 50% or more, 60% or more, 70% or more, 80% or more, or even 90% or more of the inter-valley-fold height $H_1$. Herein, the valley fold 29 refers to an inner fold in a folded portion 30 of the air filter medium 2 folded into pleats. Additionally, an outer fold in the folded portion 30 is the pleat line 25. The inter-valley-fold height $H_1$ refers to a separation distance in the height direction H between one valley fold 29 (e.g., the valley fold 29B) and another valley fold 29 (e.g., a valley fold 29A on the above one side) adjacent to the one valley fold 29 along the air filter medium 2.

A ratio $W_1/W_0$ is, for example, 0.6 or more and may be 0.65 or more, 0.7 or more, 0.75 or more, 0.8 or more, 0.85 or more, or even 0.9 or more in a cross-section (corresponding to the cross-section of FIG. 5C; hereinafter referred to as "cross-section Y") of a portion (refer to FIG. 5B; the portion is hereinafter referred to as "portion X") of the strip-shaped body 7, the portion being located between the valley fold 29B on the above other side (e.g., the upstream side, as shown in the above example) of the folded air filter medium 2 and a plane 37 in contact with two valley folds 29A and 29A' on the above one side (e.g., the downstream side, as shown in the above example), the portion being viewed along the direction of the air flow 14, the two valley folds 29A and 29A' being adjacent to the valley fold 29B along the air filter medium 2. The symbol $W_0$ is a width of the strip-shaped body 7 in the cross-section Y. The symbol $W_1$ is a width of a portion of the strip-shaped body 7 in the cross-section Y, the portion being in contact with the first porous fluorine resin membrane 21. The larger the ratio $W_1/W_0$ is, the more reliably the side leak 16 can be reduced. The cross-section Y may be a cross-section of a portion being part of the strip-shaped body 7 and filling the region 27. The width of the strip-shaped body 7 refers to a length in the width direction W. The width $W_0$ can be determined as an average of widths of at least three portions of the strip-shaped body 7 in cross-sections Y, the at least three portions being selected for different valley folds

29B. The width $W_1$ can be determined as an average of widths of at least three portions of the strip-shaped body 7, the portions each being in contact with the first porous fluorine resin membrane 21 in the cross-section Y, the portions being selected for different valley folds 29B (if there are a plurality of such portions in one cross-section Y, the sum of widths of the plurality of such portions is employed as the width in the cross-section Y). The width $W_1$ of a strip-shaped body not reaching the first porous fluorine resin membrane 21 is 0 (zero). In the cross-section Y of the portion filling the region 27, the strip-shaped body 7 is in contact with two faces of the air filter medium 2, the two faces facing to each other on the above one side (e.g., the downstream side in the directions of the air flows 14 and 15, as shown in the above example). In this case, at least one contact face where the strip-shaped body 7 is in contact with the first porous fluorine resin membrane 21 may satisfy the above ratio, or both contact faces may satisfy the above ratio.

In the cross-section Y of the portion X of the strip-shaped body 7 viewed along the direction of the air flow 14, the width $W_1$ of the portion of the strip-shaped body 7 is, for example, 1.0 mm or more, and may be 1.2 mm or more, 1.4 mm or more, 1.5 mm or more, 1.7 mm or more, 1.9 mm or more, or even 2.0 mm or more, the portion being in contact with the first porous fluorine resin membrane 21. The larger the width $W_1$ is, the more reliably the side leak 16 is reduced. The upper limit of the width $W_1$ is, for example, 5.0 mm.

The cross-section Y of the portion X of the strip-shaped body 7 viewed along the direction of the air flow 14 may be flattened. The strip-shaped body 7 shown in FIGS. 5A to 5C falls into this embodiment. When the cross-section Y is flattened, the ratio $W_1/W_0$ and the width $W_1$ can be more reliably increased. A length-to-width ratio (a ratio $L_0/W_0$ of a longitudinal length $L_0$ to the width $W_0$; refer to FIG. 5C) of the flattened cross-section Y is, for example, less than 1, and may be 0.8 or less, 0.7 or less, 0.6 or less, 0.5 or less, 0.4 or less, 0.3 or less, or even 0.2 or less. The lower limit of the ratio $L_0/W_0$ is, for example, 0.1 or more. The longitudinal length $L_0$ can be determined as an average of longitudinal lengths of at least three portions of the strip-shaped body 7 in cross-sections Y, the at least three portions being selected for different valley folds 29B. The longitudinal length of the strip-shaped body 7 refers to a length in the length direction L.

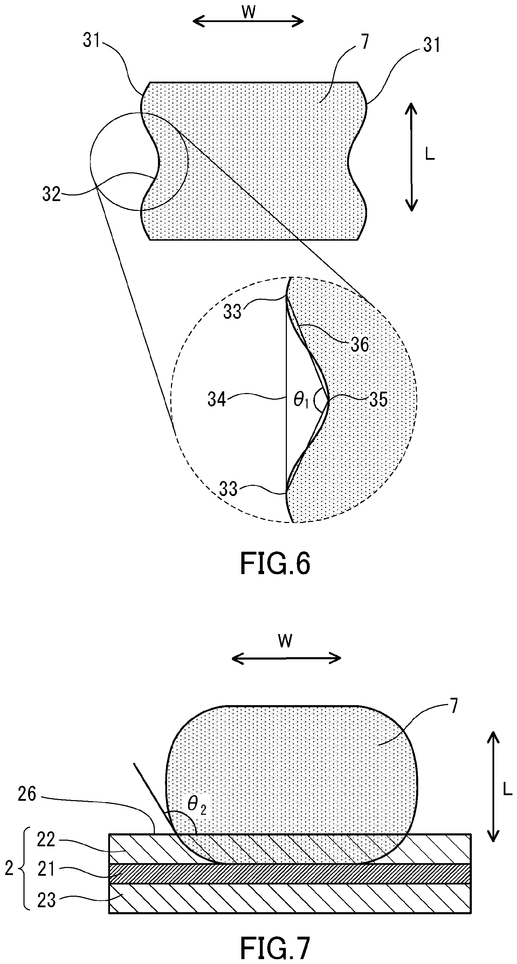

In the cross-section Y of the portion X of the strip-shaped body 7 viewed along the direction of the air flow 14, at least one of two sides (sides in the width direction) 31 of the strip-shaped body 7 does not need to have a recessed portion, or neither side 31 has a recessed portion (refer to FIG. 5C). In these cases, the ratio $W_1/W_0$ and the width $W_1$ can be more reliably increased. When the side 31 of the strip-shaped body 7 has a recessed portion 32, the recessed portion 32 may have a vertex angle $\theta_1$ being an obtuse angle (more than 90°) (refer to FIG. 6). The vertex angle $\theta_1$ of the recessed portion 32 is defined as a vertex angle of a triangle 36 composed of two edges 33 of the recessed portion 32 in the above cross-section and a point (vertex) 35 located on a surface of the recessed portion 32 and farthest from a line segment 34 (corresponding to a tangent at an opening of the recessed portion 32) connecting the edges 33.

A contact angle $\theta_2$ (refer to FIG. 7) between the strip-shaped body 7 and the air filter medium 2 may be an obtuse angle (more than 90°). Whether the contact angle $\theta_2$ is an obtuse angle can be judged by observation of the cross-section Y of the strip-shaped body 7 viewed along the direction of the air flow 14. The contact angle $\theta_2$ can be defined as an angle to the surface, more specifically a pleat face 26, of the air filter medium 2. Herein, the term "pleat face" refers to a region of the surface of the air filter medium 2 folded into pleats, the region being between one pleat line 25 (e.g., the pleat line 25B) and another pleat line 25 (e.g., the pleat line 25A) adjacent to the one pleat line 25 along the air filter medium 2.

In the filter pleat pack 1 of FIGS. 5A to 5C, the region 27 is filled with the strip-shaped body 7 permeating the first air-permeable supporting layer 22 to form the ventilation inhibiting portion 3. However, the region 27 may be independent of the ventilation inhibiting portion 3 and filled with a second resin. In other words, in the filter pleat pack 1 of the present embodiment, when the end portion 11 of the filter pleat pack 1 in the width direction W is viewed along the width direction W (when the end portion 11 is viewed in the direction perpendicular to the lateral surface 12), the second resin may be placed to fill the region 27 between faces of the air filter medium 2, the faces facing to each other on the above one side (e.g., the downstream side in the direction of the air flow 15, as shown in the above example), the end portion 11 including the ventilation inhibiting portion 3 in the first air-permeable supporting layer 22. The side leak 16 can be more reliably reduced in this embodiment, too. When the first air-permeable supporting layer 22 includes the ventilation inhibiting portion 3 in both of the end portions 11, the second resin may be placed in the region 27 in at least one of the end portions 11.

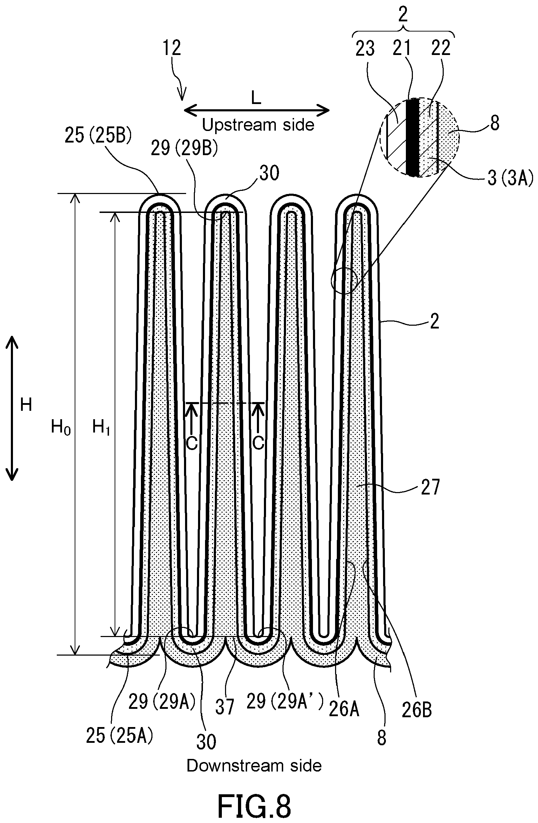

FIG. 8 shows one example of this embodiment. As FIG. 5B, FIG. 8 shows a plan view of a portion of the lateral surface 12 (12A) of the filter pleat pack 1 and a partially enlarged view of a region being part of the lateral surface 12 and including the air filter medium 2 and the ventilation inhibiting portion 3, the portion being viewed along the width direction W, the lateral surface 12 being closer to the end portion 11 (11A) in the width direction W. The region 27 is filled with a second resin 8.

The second resin 8 may fill the region 27 partially. When the end portion 11 of the filter pleat pack 1 in the width direction W is viewed along the width direction W, the second resin may be placed to fill the region 27 from the valley fold 29B located on the above other side (e.g., the upstream side in the direction of the air flow 14 that passes through the filter pleat pack 1) to 50% or more, 60% or more, 70% or more, 80% or more, or even 90% or more of the inter-valley-fold height $H_1$, the end portion 11 including the ventilation inhibiting portion 3 in the first air-permeable supporting layer 22.

The ventilation inhibiting portion 3 of FIG. 8 may be the above-described ventilation inhibiting portion 301 or 302. However, the ventilation inhibiting portion 3 is not limited to the above examples.

The first resin and the second resin 8 are each, for example, a hot-melt resin or a curable resin, and a hot-melt resin is preferred so that the filter pleat pack 1 can achieve flexibility more reliably. However, the first resin and the second resin 8 are not limited to the above examples. It should be noted that photocurable resins may be excluded from the first resin and the second resin 8. Since photocurable resins have a low viscosity before cured, it may be difficult in some cases to control the shape of the strip-shaped body 7 and the shape of the filling resin in the region 27.

Examples of the hot-melt resin include polyamide resins, polyolefin resins, and polyvinyl alcohol resins. An ethylene-vinyl acetate copolymer (EVA) resin is included in the polyvinyl alcohol resins.

The first resin and the second resin 8 may be identical to or different from each other.

The filter pleat pack 1 can be manufactured, for example, by the following methods. However, the method for manufacturing the filter pleat pack 1 is not limited to the following methods.

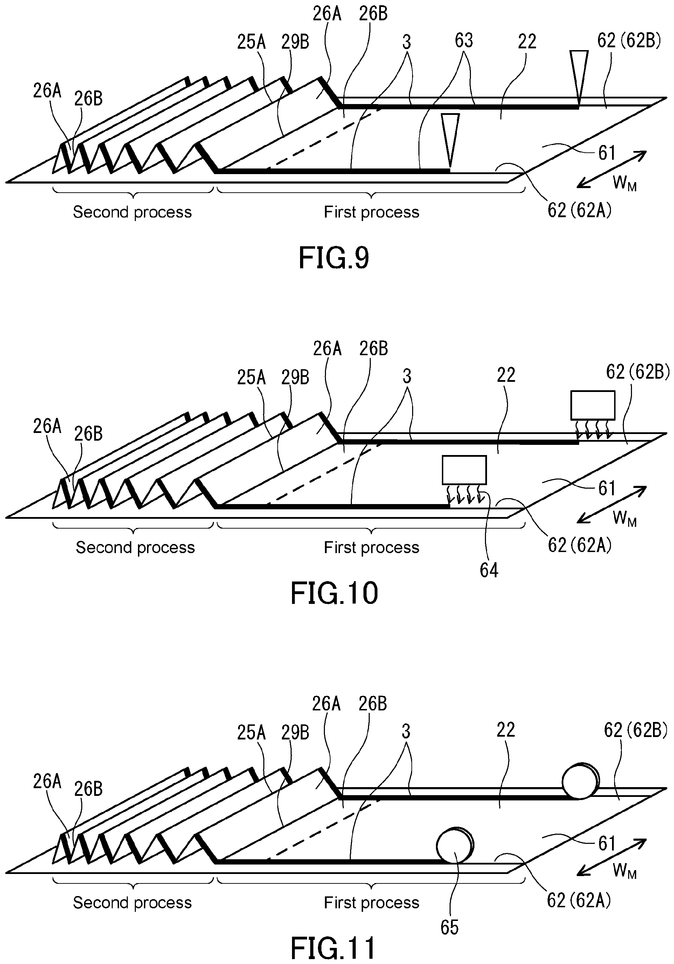

FIG. 9 shows one example of the method for manufacturing the filter pleat pack 1. The method shown in FIG. 9 includes a first process and a second process. In the first process, the ventilation inhibiting portion 3 is formed in at least one end portion 62 (in the example of FIG. 9, each of two end portions 62A and 62B) of an unprocessed filter medium 61 in a width direction $W_M$, the ventilation inhibiting portion 3 extending along the end portion 62 and being configured to inhibit ventilation in the width direction $W_M$ through the first air-permeable supporting layer 22, the unprocessed filter medium 61 including the first porous fluorine resin membrane 21 and the first air-permeable supporting layer 22. In the second process, the filter pleat pack 1 is obtained by pleating of the unprocessed filter medium 61 in such a manner that the pleat line 25 extends in the width direction $W_M$. By the pleating of the unprocessed filter medium 61 in a sheet shape, the pleat lines 25A being mountain folds and the valley folds 29B are alternately formed, and pleat faces 26A and 26B are raised to be adjacent to each other with the valley fold 29B in between. In the example of FIG. 9, the ventilation inhibiting portion 3 is formed by applying a first resin 63 in a fluidized state onto the surface of the unprocessed filter medium 61 on the first air-permeable supporting layer 22 side to allow the applied resin 63 to permeate the first air-permeable supporting layer 22. The fluidized state may be a molten state. The pleating in the second process can be performed by a known method, such as using a reciprocating pleating machine or a rotary pleating machine.

The unprocessed filter medium 61 can have the same configuration as that of the air filter medium 2, except that the unprocessed filter medium 61 is not pleated and does not have the ventilation inhibiting portion 3.

FIG. 10 shows another example of the method for manufacturing the filter pleat pack 1. The method of FIG. 10 is the same as that of FIG. 9, except that the ventilation inhibiting portion 3 is formed by thermal fusion. According to this method, the ventilation inhibiting portion 3 is formed by applying heat 64 to at least one end portion 62 of the unprocessed filter medium 61 in the width direction $W_M$. In the example of FIG. 10, the heat 64 is applied from the first air-permeable supporting layer 22 side of the unprocessed filter medium 61. The heat 64 is applied, for example, so as to melt and fuse a material, such as a fibrous material, of the first air-permeable supporting layer 22.

FIG. 11 shows another example of the method for manufacturing the filter pleat pack 1. The method of FIG. 11 is the same as that of FIG. 9, except that the ventilation inhibiting portion 3 is formed by thermal fusion. According to this method, the ventilation inhibiting portion 3 is formed by applying heat and pressure to at least one end portion 62 of the unprocessed filter medium 61 in the width direction $W_M$ using a roller 65. In the example of FIG. 11, the roller 65 is in contact with the unprocessed filter medium 61 on the first air-permeable supporting layer 22 side.

The ventilation inhibiting portion 3 may be formed by both permeation of the first resin and thermal fusion.

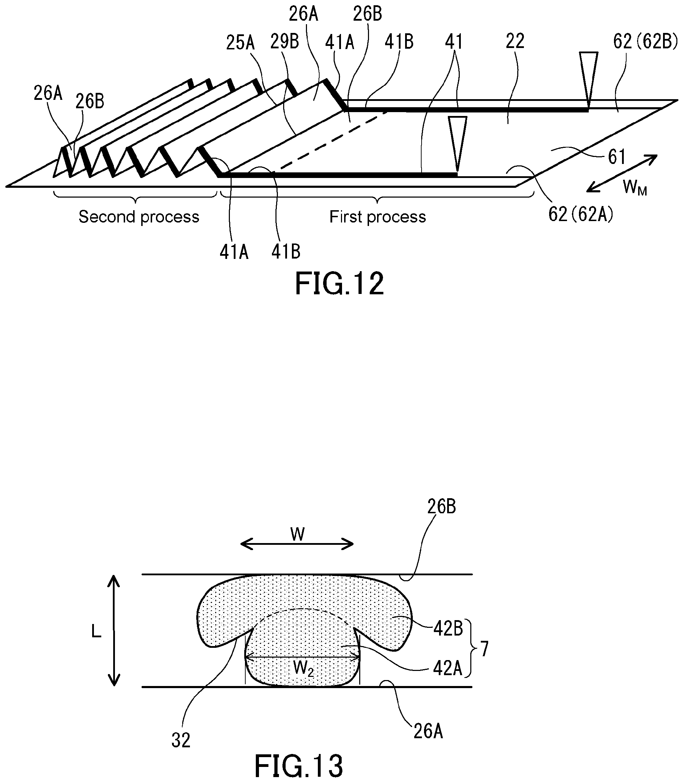

FIG. 12 shows another example of the method for manufacturing the filter pleat pack 1. According to the method of FIG. 12, the strip-shaped body 7 including a hot-melt resin is formed at the time of the pleating of the unprocessed filter medium 61. In the method, the first process and the second process are performed during conveyance of the unprocessed filter medium 61 from right to left in the figure. In the first process, a resin 41 in a fluidized state is applied to the surface of the sheet-shaped unprocessed filter medium 61 on the first air-permeable supporting layer 22 side. The resin 41 is generally identical to the resin forming the strip-shaped body 7. The fluidized state may be a molten state. The resin 41 is typically applied in a strip shape. The unprocessed filter medium 61 to which the resin 41 has been applied is conveyed for the second process and pleated. By the pleating of the sheet-shaped unprocessed filter medium 61, when the surface to which the resin 41 has been applied is viewed, the pleat lines 25A being mountain folds and the valley folds 29B are alternately formed, and the pleat faces 26A and 26B raised to be adjacent to each other with the valley fold 29B in between are fixed to each other by the resin 41, more specifically, by joining a resin 41A placed on the pleat face 26A and a resin 41B placed on the pleat face 26B to each other. The resins 41A and 41B joined to each other are cooled to be the strip-shaped body 7. The pleating of the air filter medium 2 is performed by repeating, as described above, formation of the pleat line 25A and the valley fold 29B and fixation of the pleat faces 26A and 26B by the strip-shaped body 7. By this method, the strip-shaped body 7 can be formed to fill the region 27 between faces of the air filter medium 2, the faces facing to each other on the above one side (e.g., the downstream side in the direction of the air flow 15).

In the first process of FIG. 12, the temperature (application temperature) of the resin 41 to be applied to the unprocessed filter medium 61 is preferably higher than a normal application temperature. In this case, the resin 41 has a decreased viscosity, which promotes permeation of the resin 41 into the first air-permeable supporting layer 22. The application temperature is, for example, higher by 10°C or more than a normal application temperature, and may be higher by 15°C or more, 20°C or more, 25°C or more, or even 30°C or more than the normal application temperature. A specific application temperature depends on the type of the resin 41. When the resin 41 is an EVA resin, the specific application temperature is, for example, 150 to 180°C, and may be 160 to 170°C.

Moreover, in the first process of FIG. 12, an application width of the resin 41 to be applied to the unprocessed filter medium 61 is preferably greater than a normal application width. In this case, the applied resin 41 has an increased heat capacity, a decrease in the temperature of the resin 41A after the application slows down, and permeation of the resin 41 into the first air-permeable supporting layer 22 is promoted. The application width is, for example, greater by 0.3 mm than a normal application width, and may be greater by 0.5 mm, 0.7 mm, 1.0 mm, 1.2 mm, or even 1.4 mm than the normal application width. A specific application width depends on the type of the resin 41 and the application temperature. When the resin 41 is an EVA resin and the application temperature is 150°C or higher, the specific application width may be, for example, 1.5 mm or more, 1.7 mm or more, or even 2.0 mm or more. The upper limit of the application width is not limited as long as a filtration area necessary for the filter pleat pack 1 can be secured. The upper limit of the application width is, for example, 5.0 mm or less.

For example, the strip-shaped body 7 satisfying the above range of the ratio $W_1/W_0$ or the strip-shaped body 7 satisfying the above range of the width $W_1$ is more reliably formed by increasing the application temperature and/or the application width of the resin 41 to be applied to the air filter medium 2 in the first process.

Moreover, the strip-shaped body 7 having the cross-section Y in a flattened shape or the strip-shaped body 7 having the cross-section Y in which at least one side 31 does not have the recessed portion 32 is more reliably formed by increasing the application temperature and/or the application width of the resin 41 to be applied to the air filter medium 2 in the first process.

According to the method of FIG. 12, the strip-shaped body 7 is formed in the second process by joining and cooling the resin 41A applied onto the pleat face 26A and the resin 41B applied onto the pleat face 26B. The resin 41A applied earlier has a lower temperature than that of the resin 41B at the time of the joining; in other words, the resin 41A has a lower fluidity at the time of the joining. Consequently, for example, as shown in FIG. 13, the strip-shaped body 7 formed by the joining is likely to maintain an original shape, such as the shape of a string having a circular or elliptical cross-section, of the applied resin 41A in a portion 42A derived from the resin 41A and have a greatly deformed cross-sectional shape in a portion 42B derived from the resin 41B. Meanwhile, increasing the application temperature and/or the application width of the resin 41 to be applied to the unprocessed filter medium 61 in the first process delays the decrease in the temperature of the resin 41A, and accordingly deformation at the time of the joining is promoted for the portion 42A derived from the resin 41A, too. As a result, for example, the strip-shaped body 7 having the cross-section Y in a flattened shape and the strip-shaped body 7 having the cross-section Y in which at least one side 31 does not have the recessed portion 32 are more reliably formed. In the cross-section Y of the strip-shaped body 7 shown in FIG. 13, each of the two sides 31 of the strip-shaped body 7 has the recessed portion 32 having an acute vertex angle $\theta_1$. In this cross-section Y, a width $W_2$ of the portion 42A derived from the resin 41A is almost unchanged from the application width of the resin 41A.

Each of the filter pleat pack manufacturing methods shown in the above examples includes:

forming the ventilation inhibiting portion 3 in at least one end portion 62 of the unprocessed filter medium 61 in the width direction $W_M$, the ventilation inhibiting portion 3 extending along the end portion 62 and being configured to inhibit ventilation in the width direction $W_M$ through the first air-permeable supporting layer 22, the unprocessed filter medium 61 including the first porous fluorine resin membrane 21 and the first air-permeable supporting layer 22; and

obtaining the filter pleat pack 1 by pleating the unprocessed filter medium 61 in such a manner that the pleat line 25 extends in the width direction Wnn.

An additional ventilation inhibiting portion configured to inhibit ventilation in the width direction W through a layer, such as the second air-permeable supporting layer 23, located on the above other side (e.g., the upstream side in the directions of the air flows 14 and 15) with respect to the first porous fluorine resin membrane 21 may be or may not to be formed. In each illustrated filter pleat pack 1 described above, the layer located on the above other side does not include such an additional ventilation inhibiting portion.

The strip-shaped body 7 may be or may not be placed on the above other side (e.g., the upstream side in the direction of the air flow 14) of the filter pleat pack 1. In each illustrated filter pleat pack 1 described above, the strip-shaped body 7 is not placed on the above other side. Moreover, no other member than the strip-shaped body 7 is placed on the above other side in the end portions 11A and 11B in the width direction W. The surface of the air filter medium 2 on the above other side is exposed in the end portions 11A and 11B in the width direction.

(Air filter medium)

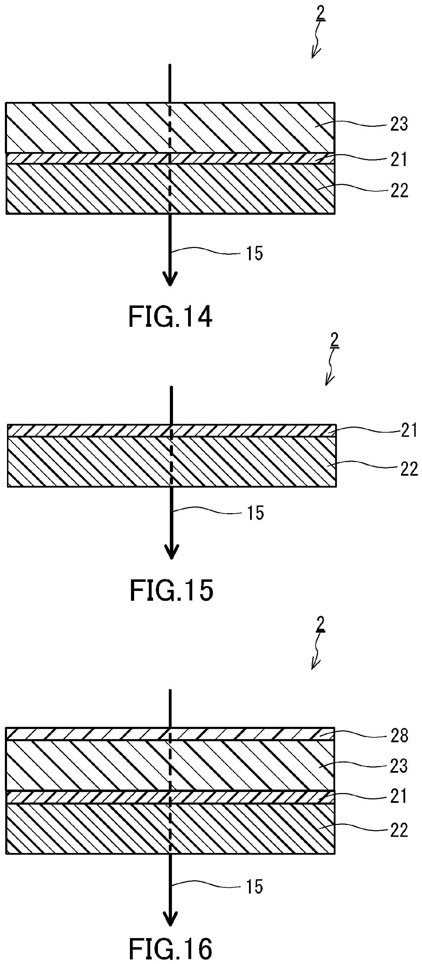

FIG. 14 shows one example of the air filter medium 2. The air filter medium 2 of FIG. 14 is a filter medium included in each illustrated filter pleat pack 1 described above, and has a three-layer structure composed of the second air-permeable supporting layer 23, the first porous fluorine resin membrane 21, and the first air-permeable supporting layer 22 placed in this order from the upstream side in the direction of the air flow 15 that passes through the air filter medium 2. The second air-permeable supporting layer 23 and the first porous fluorine resin membrane 21 are joined to each other. The first porous fluorine resin membrane 21 and the first air-permeable supporting layer 22 are joined to each other. In the air filter medium 2 of FIG. 14, one outermost layer (a layer through which the air flow 15 flows in) is the second air-permeable supporting layer 23, and the other outermost layer (a layer through which the air flow 15 flows out) is the first air-permeable supporting layer 22.

(First porous fluorine resin membrane)

The first porous fluorine resin membrane 21 is a layer that can function as a main filter of the air filter medium 2. The porous fluorine resin membrane 21 is typically formed of countless fluorine resin fibrils, which are fine fibrous structures. The porous fluorine resin membrane 21 may include a fluorine resin node connected to the fibril.

The porous fluorine resin membrane 21 is formed chiefly of a fluorine resin. Saying that the porous fluorine resin membrane 21 is formed chiefly of a fluorine resin means that the fluorine resin content is greatest of the contents of all components included in the porous fluorine resin membrane 21. The fluorine resin content in the porous fluorine resin membrane 21 is, for example, 50 weight% or more, and may be 60 weight% or more, 70 weight% or more, 80 weight% or more, 90 weight% or more, or even 95 weight% or more. The porous fluorine resin membrane 21 can include, for example, a filler in addition to the fluorine resin.

Examples of the fluorine resin include PTFE, an ethylene-tetrafluoroethylene-hexafluoropropylene copolymer (EFEP), a tetrafluoroethylene-hexafluoropropylene-vinylidene fluoride copolymer (THV), a tetrafluoroethylene-hexafluoropropylene copolymer (FEP), a tetrafluoroethylene-perfluoroalkoxyethylene copolymer (PFA), and an ethylene-tetrafluoroethylene copolymer (ETFE).

The porous fluorine resin membrane 21 may include two or more fluorine resins.

The porous fluorine resin membrane 21 may be a porous PTFE membrane.

The porous fluorine resin membrane 21 can be obtained, for example, by molding a mixture of an unsintered fluorine resin powder and a liquid lubricant into a film by a method such as extrusion and/or rolling, removing the liquid lubricant from the obtained unsintered film, and then stretching the unsintered film. At any timing after the formation of the unsintered film, sintering may be performed in which the film is heated to a temperature equal to or higher than the melting point of the fluorine resin. Examples of the liquid lubricant include hydrocarbon oils such as naphtha, white oil, and liquid paraffin. However, the liquid lubricant is not limited as long as the liquid lubricant can wet the surfaces of the fluorine resin particles and be removed later. An example of the stretching is biaxial stretching that is a combination of stretching at a stretching ratio of 2 to 60 in an MD (longitudinal direction) of the unsintered film and a stretching temperature of 150 to 390°C and stretching at a stretching ratio of 10 to 60 in a TD (width direction) of the film and a stretching temperature of 40 to 150°C. However, the method for manufacturing the porous fluorine resin membrane 21 is not limited as long as a collection capability suitable for the intended use of the filter pleat pack 1 and an air filter unit including the filter pleat pack 1 is obtained.

The thickness of the porous fluorine resin membrane 21 is, for example, 0.1 to 100 $\mu$m, and may be 0.5 to 80 $\mu$m, or even 1 to 50 $\mu$m.

The porous fluorine resin membrane 21 has a porosity of, for example, 70 to 98%. The porosity can be measured in the following manner. The porous fluorine resin membrane 21 serving as an evaluation object is cut to given dimensions (for example, a 6-cm-diameter circle), and the volume and mass thereof are determined. The porosity can be calculated by substituting the volume and mass into the following equation (1). In the equation (1), V (unit: $cm^3$) represents the volume, W (unit: g) represents the mass, and D (unit: $g/cm^3$) represents the true density of the fluorine resin.

$$\text{Porosity (\%)} = 100 \times [V - (W/D)]/V \qquad (1)$$

The grammage of the porous fluorine resin membrane 21 is, for example, 0.05 to 10 $g/m^2$, and may be 0.1 to 5 $g/m^2$, or even 0.3 to 3 $g/m^2$.

The pressure drop PD of the porous fluorine resin membrane 21 at a permeate flow rate of 5.3cm/sec is, for example, 10 to 500 Pa, and may be 20 to 400 Pa, or even 40 to 350 Pa.

The pressure drop PD of each of the air filter medium 2 and the layers forming the air filter medium 2 can be evaluated in the following manner. The filter medium or layer being an evaluation object is set in a circular holder with an effective area of 100 $cm^2$. Next, the pressure drop is measured with a pressure meter (manometer) under conditions where air is allowed to pass through the set evaluation object and the linear velocity of the air passing through the evaluation object is adjusted to 5.3 cm/sec with the aid of a flow meter. The pressure drop is measured eight times for one evaluation object, and the average of the eight values is defined as the pressure drop PD.

The collection efficiency CE of the porous fluorine resin membrane 21 is, for example, 60 to 99.99999%, and may be 90 to 99.9999%, or even 99 to 99.999%, the collection efficiency CE being measured using polyalphaolefin (PAO) particles (hereinafter referred to as "polydiperse PAO particles") being polydisperse particles having a peak in number in a particle size range of 0.1 to 0.2 $\mu$m under conditions where an evaluation target particle size is 0.1 to 0.2 $\mu$m and the permeate flow rate is 5.3 cm/sec.

The collection efficiency CE of each of the air filter medium 2 and the layers forming the air filter medium 2 can be evaluated in the following manner. The filter medium or layer being an evaluation object is set in a circular holder with an effective area of 100 $cm^2$. Next, air is allowed to pass through the set evaluation object, and the linear velocity of the air passing through the evaluation object is adjusted to 5.3 cm/sec with the aid of a flow meter. Then, polydisperse PAO particles are introduced in the air passing through the evaluation object such that the concentration of particles having a particle size of 0.1 to 0.2 $\mu$m is $4 \times 10^8$ particles/L or more. The polydisperse PAO particles can be generated, for example, using a constant-output aerosol atomizer. After that, the concentration of polydisperse PAO particles included in the air having passed through the evaluation object is measured using a particle counter placed downstream of the holder, the polydisperse PAO particles having a particle size in the above evaluation target range. The collection efficiency CE of the evaluation object is calculated by the following equation (2). Both upstream and downstream particle concentrations in the equation (2) refer to the concentrations of particles having a particle size in the evaluation target range. The upstream particle concentration can be determined by allowing the above air in which the polydisperse PAO particles are introduced to flow without setting the evaluation object in the holder and analyzing the air using the above particle counter. It should be noted that the polydisperse PAO particles are single peak particles having a peak in number only in the particle size range of 0.1 to 0.2 $\mu$m.

$$\text{Collection efficiency CE} = [1 - (\text{downstream particle concentration})/(\text{upstream particle concentration})] \times 100\ (\%) \qquad (2)$$

The PF (performance factor) value determined for the porous fluorine resin membrane 21 by the following equation (3) is, for example, 20 or more, and may be 22 or more, 23 or more, 25 or more, 27 or more, 28 or more, or even 30 or more. The upper limit of the PF value is, for example, 40 or less, and may be 38 or less, 36 or less, or even 35 or less. In the equation (3), PD represents a pressure drop, and CE represents a collection efficiency. It should be noted that the unit of the pressure drop PD in the equation (3) is mmH$_2$O.

$$\text{PF value} = \{-\log[(100 - CE)/100]/PD\} \times 100 \qquad (3)$$

The porous fluorine resin membrane 21 of FIG. 14 is a single layer. The porous fluorine resin membrane 21 may be a laminate composed of two or more identical or different membranes.

The porous fluorine resin membrane 21 of FIG. 14 is in contact with the first air-permeable supporting layer 22. An additional layer may be placed between the porous fluorine resin membrane 21 and the first air-permeable supporting layer 22. However, in the case where the porous fluorine resin membrane 21 and the first air-permeable supporting layer 22 are in contact with each other with no additional layer therebetween, for example, the resin 41 more reliably permeates to reach the porous fluorine resin membrane 21 for formation of the strip-shaped body 7.

The porous fluorine resin membrane 21 of FIG. 14 is in contact with the second air-permeable supporting layer 23. An additional layer may be placed between the porous fluorine resin membrane 21 and the second air-permeable supporting layer 23.

The porous fluorine resin membrane 21 may be a porous fluorine resin membrane included in a commonly-known air filter medium.

(First air-permeable supporting layer)

The first air-permeable supporting layer 22 can function as a layer supporting the porous fluorine resin membrane 21 from the above one side (e.g., the downstream side in the direction of the air flow 15).

The air-permeable supporting layer 22 is, for example, formed of a fibrous material. The fibrous material that can form the air-permeable supporting layer 22 is, for example, at least one fiber selected from a glass fiber, a resin fiber, and a metal fiber. Examples of the resin fiber include polyolefin fibers such as a polyethylene (PE) fiber and a polypropylene (PP) fiber, polyester fibers such as a polyethylene terephthalate (PET) fiber and a polyethylene naphthalate fiber, acrylic fibers such as an acrylonitrile fiber, and polyamide fibers including an aromatic polyamide fiber. The resin fiber may be a composite fiber of two or more resins. An example of the composite fiber is a fiber having a core-sheath structure composed of a core and a sheath covering the core. The melting point of the sheath may be lower than the melting point of the core. A specific example of the composite fiber is a fiber formed of a PET core and a PE sheath. In this case, since PE strongly joins to the porous fluorine resin membrane 21, the air-permeable supporting layer 22 and the porous fluorine resin membrane 21 are more reliably joined to each other.

The air-permeable supporting layer 22 may be a non-woven fabric formed of a resin fiber. Examples of the non-woven fabric include a melt-blown non-woven fabric and a spunbond non-woven fabric. The non-woven fabric may be a spunbond non-woven fabric because, in that case, the pressure drop PD of the air filter medium 2 can be reduced.

The air-permeable supporting layer 22 may have a material other than the fiber material. The material may be, for example, a binder for binding the fibers of the fibrous material. The binder is typically formed of a resin. Examples of the resin include an acrylic resin, a polyvinyl alcohol, and a polyethylene oxide.

The thickness of the air-permeable supporting layer 22 is, for example, 10 to 2000 $\mu$m, and may be 50 to 1000 $\mu$m, or even 100 to 500 $\mu$m.

The grammage of the air-permeable supporting layer 22 is, for example, 10 g/m$^2$ or more, and may be 50 g/m$^2$ or more, or even 100 g/m$^2$ or more. The upper limit of the grammage is, for example, 500 g/m$^2$ or less.

The air-permeable supporting layer 22 has a high air permeability in the thickness direction and a low collection efficiency, compared to the porous fluorine resin membrane 21.

The pressure drop PD of the air-permeable supporting layer 22 at a permeate flow rate of 5.3 cm/sec is, for example, 0.1 to 100 Pa, and may be 0.1 to 80 Pa, or even 0.1 to 50 Pa.

The collection efficiency CE measured for the air-permeable supporting layer 22 using polydisperse PAO particles under conditions where the evaluation target particle size is 0.3 to 0.5 μm and the permeate flow rate is 5.3 cm/sec is, for example, 0.1 to 50%, and may be 0.5 to 20%, or even 1 to 5%.

The air-permeable supporting layer 22 of FIG. 14 is a single layer. The air-permeable supporting layer 22 may be a laminate composed of two or more identical or different layers.

The air-permeable supporting layer 22 may be an air-permeable supporting layer included in a commonly-known air filter medium.

(Second air-permeable supporting layer)

The second air-permeable supporting layer 23 is located on the above other side (e.g., the upstream side in the direction of the air flow 15) with respect to the first porous fluorine resin membrane 21, and the second air-permeable supporting layer 23 and the first air-permeable supporting layer 22 sandwich the first porous fluorine resin membrane 21. The second air-permeable supporting layer 23 functions as a layer supporting the first porous fluorine resin membrane 21 from the above other side.

The air-permeable supporting layer 23 can have a combination of any configuration and/or any property described above for the first air-permeable supporting layer 22. The air-permeable supporting layer 23 may be identical to the first air-permeable supporting layer 22.

The configuration of the air filter medium 2 is not limited as long as the air filter medium 2 includes the first porous fluorine resin membrane 21 and the first air-permeable supporting layer 22 and the first air-permeable supporting layer 22 is placed on the above one side (e.g., the downstream side in the direction of the air flow 15) with respect to the first porous fluorine resin membrane 2.

FIG. 15 shows another example of the air filter medium 2. The air filter medium 2 of FIG. 15 has a two-layer structure composed of the first porous fluorine resin membrane 21 and the first air-permeable supporting layer 22 placed in this order from the upstream side in the direction of the air flow 15 that passes through the air filter medium 2. The first porous fluorine resin membrane 21 and the first air-permeable supporting layer 22 are joined to each other. In the air filter medium 2 of FIG. 15, one outermost layer (the layer through which the air flow 15 flows in) is the first porous fluorine resin membrane 21, and the other outermost layer (the layer through which the air flow 15 flows out) is the first air-permeable supporting layer 22.

FIG. 16 shows yet another example of the air filter medium 2. The air filter medium 2 of FIG. 16 has the same configuration as that of the air filter medium 2 of FIG. 14, except that the air filter medium 2 of FIG. 16 further includes a second porous fluorine resin membrane 28. The second porous fluorine resin membrane 28 is located on the above other side (e.g., the upstream side in the direction of the air flow 15) with respect to the first porous fluorine resin membrane 21. Of all porous fluorine resin membranes included in the air filter medium 2 of FIG. 16, the first porous fluorine resin membrane 21 is located nearest to the above one side (e.g., on a most downstream side in the direction of the air flow 15). The air filter medium 2 of FIG. 16 has a four-layer structure composed of the second porous fluorine resin membrane 28, the second air-permeable supporting layer 23, the first porous fluorine resin membrane 21, and the first air-permeable supporting layer 22 placed in this order from the upstream side in the direction of the air flow 15.

The second porous fluorine resin membrane 28 can have a combination of any configuration and/or any property described above for the first porous fluorine resin membrane 21. The second porous fluorine resin membrane 28 may be identical to the first porous fluorine resin membrane 21. The second porous fluorine resin membrane 28 may have a lower pressure drop PD and/or a lower collection efficiency CE than those of the first porous fluorine resin membrane 21. In this case, the air filter medium 2 can have a longer service life by using the second porous fluorine resin membrane 28 as a prefilter.

The second porous fluorine resin membrane 28 of FIG. 16 is in contact with the second air-permeable supporting layer 23. An additional layer may be placed between the second porous fluorine resin membrane 28 and the second air-permeable supporting layer 23.

In the air filter medium 2 of FIG. 16, one outermost layer (the layer through which the air flow 15 flows in) is the second porous fluorine resin membrane 28, and the other outermost layer (the layer through which the air flow 15 flows out) is the first air-permeable supporting layer 22.

The number of porous fluorine resin membranes and air-permeable supporting layers included in the air filter medium 2 is not limited to those in the above examples. For example, an additional air-permeable supporting layer may be placed on the upstream side in the direction of the air flow 15 with respect to the second porous fluorine resin membrane 28.

The air filter medium 2 may include an additional layer and/or member other than those described above. For example, an optional layer such as a prefilter layer may be placed on the upstream side in the direction of the air flow 15 with respect to the first porous fluorine resin membrane 21 and/or the second porous fluorine resin membrane 28.

The thickness of the air filter medium 2 is, for example, 50 to 4000 $\mu$m, and may be 100 to 2000 $\mu$m, or even 200 to 1000 $\mu$m.

The grammage of the air filter medium 2 is, for example, 10 to 1000 g/m$^2$, and may be 20 to 500 g/m$^2$, or even 50 to 200 g/m$^2$.

The pressure drop PD of the air filter medium 2 at a permeate flow rate of 5.3 cm/sec is, for example, 10 to 500 Pa, and may be 20 to 400 Pa, or even 40 to 350 Pa.

The collection efficiency CE measured for the air filter medium 2 using polydisperse PAO particles under conditions where the evaluation target particle size is 0.1 to 0.2 $\mu$m and the permeate flow rate is 5.3 cm/sec is, for example, 60 to 99.99999%, and may be 90 to 99.9999%, or even 99 to 99.999%.

The PF value determined by the above equation (3) for the air filter medium 2 is, for example, 20 or more, and may be 22 or more, 23 or more, 25 or more, 27 or more, 28 or more, or even 30 or more. The upper limit of the PF value is, for example, 40 or less, and may be 38 or less, 36 or less, or even 35 or less.

The layers in the air filter medium 2 are joined to each other. The layers, such as the porous fluorine resin membrane(s) and the air-permeable supporting layer(s), included in the air filter medium 2 can be joined by thermal lamination or lamination using an adhesive. Joining by thermal lamination is preferred because, in that case, a pressure drop increase at an joining interface can be reduced. The air filter medium 2 can be formed by joining the porous fluorine resin membrane(s) and the air-permeable supporting layer(s).

The air filter medium 2 may be a commonly-known air filter medium.

The filter pleat pack of the present invention may have an additional member other than those described above. Each illustrated filter pleat pack 1 described above further includes a bead 4 located somewhere other than the end portion 11 in the width direction W. The configuration of the bead 4 may be the same as the configuration of a conventional bead, or may be the same as the configuration of the strip-shaped body 7. The location of the bead 4, the number of the beads 4, and the direction in which the bead 4 extends are not limited.

The bead 4 is generally formed of a resin. Examples of the resin of the bead 4 are the same as the examples of the resin that can be included in the strip-shaped body 7. When the filter pleat pack 1 includes the strip-shaped body 7, the bead 4 and the strip-shaped body 7 may be formed of the same resin.

The filter pleat pack 1 can be, for example, integrated with a frame so as to be used as an air filter unit. However, the application of the filter pleat pack 1 is not limited to the above example. The filter pleat pack 1 having a size appropriate for its application can be used, for example, in masks, filters for vacuum cleaners, and filters for cabins of vehicles such as automobiles.


[Air filter unit]


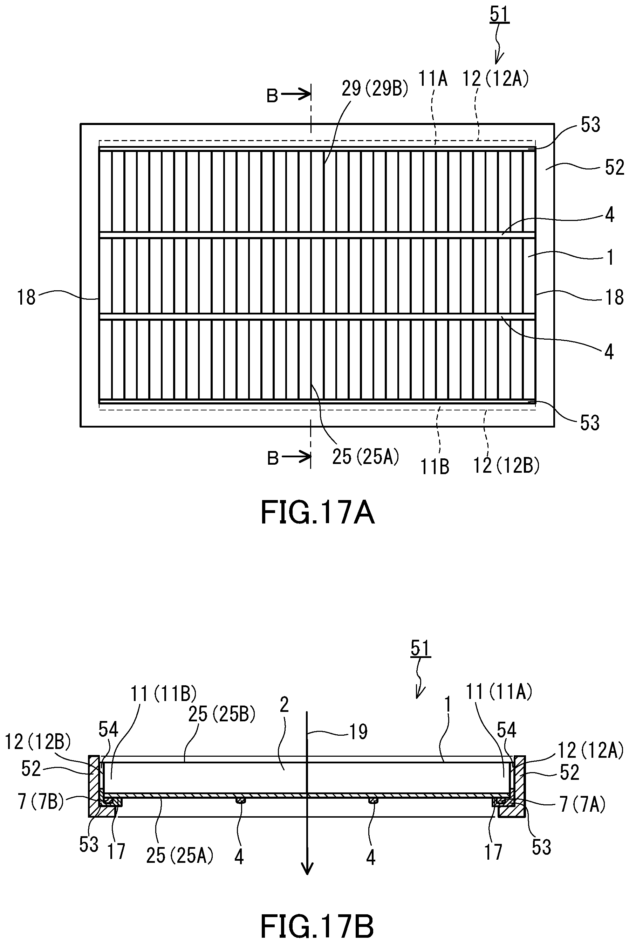

FIGS. 17A and 17B show one example of the air filter unit of the present invention. FIG. 17A is a plan view of an air filter unit 1 viewed from the downstream side in a direction of an air flow (air flow F) 19 that passes through the unit 1. The direction in which of the air flow 19 flows and the direction in which the air flow 14 that passes through the filter pleat pack 1 flows are generally identical. FIG. 17B is a cross-sectional view showing a cross-section B-B of the air filter unit 51 of FIG. 17A. The air filter unit 51 of FIGS. 17A and 17B includes the filter pleat pack 1 and a frame (support frame) 52 supporting the filter pleat pack 1. In the air filter unit 51, a peripheral portion of the filter pleat pack 1 is supported by the frame 52. The filter pleat pack 1 of FIGS. 17A and 17B has the strip-shaped body 7 (7A, 7B) in each of the two end portions 11 (11A, 11B) in the width direction W.

The end portion 11 which is part of the filter pleat pack 1 and where the strip-shaped body 7 is placed (in other words, in which the first air-permeable supporting layer 22 includes the ventilation inhibiting portion 3) is joined to the frame 52 at a region of the end portion 11 on one side (e.g., a downstream side in the direction of the air flow 19, as shown in the example of FIGS. 17A and 17B). On the other hand, a region of the end portion 11 on the other side (e.g., an upstream side in the direction of the air flow 19, as shown in the example of FIGS. 17A and 17B) is not joined to the frame 52. The filter pleat pack 1 and the frame 52 are joined by a sealing material 53, and the sealing material 53 is placed to cover a gap between the lateral surface 12 of the filter pleat pack 1 on the end portion 11 side and the frame 52 from the above one side (e.g., the downstream side in the direction of the air flow 19). However, the gap is not entirely covered by the sealing material 53, and there is a gap 54 that is not sealed between a region of the lateral surface 12 on the above other side and the frame 52. The end face 24 of the air filter medium 2 is exposed to the gap 54. The side leak 16 and a decrease in collection efficiency are reduced in the air filter unit 51 in spite of the gap 54 between the lateral surface 12 and the frame 52. It should be noted that when viewed in the direction perpendicular to the lateral surface 12, the region of the end portion 11 on the above one side and the region of the end portion 11 on the above other side (e.g., a region on the downstream side and a region on the upstream side in the direction of the air flow 19) can be defined, for example, as a region from the pleat line 25A on the above one side to 50% of a pleat height $H_0$ and a region from the pleat line 25B on the above other side to 50% of the pleat height $H_0$, respectively. Herein, the pleat height $H_0$ refers to the separation distance in the height direction H between one pleat line 25 (e.g., the pleat line 25B) and another pleat line 25 (e.g., the pleat line 25A) adjacent to the one pleat line 25 along the air filter medium 2 (refer to FIG. 1B).

At least one end portion 11 of the filter pleat pack 1 in the width direction W may be joined to the frame 52 in the region of the at least one end portion 11 on the above one side (e.g., the downstream side in the direction of the air flow 19, as shown in the above example), the at least one end portion 11 including the ventilation inhibiting portion 3 in the first air-permeable supporting layer 22. Additionally, the region of the at least one end portion 11 on the above other side (e.g., the upstream side in the direction of the air flow 19 as shown in the above example) does not need to be joined to the frame 52.

In the example shown in FIGS. 17A and 17B, the sealing material 53 is placed also on a principal surface 17 on the above one side (e.g., the downstream side in the direction of the air flow 19) in the end portion 11. The sealing material 53 is placed to cover the entire strip-shaped body 7 when viewed from the downstream side in the direction of the air flow 19 in a direction opposite to the air flow 19. The sealing material 53 used for joining on the downstream principal surface 17 may be placed to partially cover the strip-shaped body 7 when viewed from the downstream side in the direction of the air flow 19 in the direction opposite to the air flow 19.

A manner in which the end portion 11 is joined to the frame 52 in the region of the end portion 11 on the above one side (e.g., the downstream side in the direction of the air flow 19) is not limited to the above examples. The region on the above one side may be only partially joined to the frame 52. Alternately, only the lateral surface 12 of the filter pleat pack 1 on the end portion 11 side may be joined to the frame 52. The joining manner can be selected, for example, in accordance with the shape (including the cross-sectional shape) of the frame 52.

A material, such as an adhesive, a resin, or a rubber, used for conventional air filter units to join a filter pleat pack and a frame can be used as the material of the sealing material 53. A specific example of the sealing material 53 is a hot-melt resin. However, the method for joining the end portion 11 and the frame 52 is not limited to the above example.

An end portion 18 of the filter pleat pack 1 in the length direction L can be joined to the frame 52 by a known technique. The filter pleat pack 1 having a cylindrical shape may be formed by bending the filter pleat pack 1 and joining two end portions 18 to each other. The two end portions 18 may be joined to each other in such a manner that the end face 24 of the air filter medium 2 in each end portion 18 is covered by, for example, the sealing material 53. For the cylindrical filter pleat pack 1, a surface on the upstream side in the direction of the air flow 14 may be an outer circumferential surface, and a surface on the downstream side in the direction of the air flow 14 may be an inner circumferential surface.

Examples of the material of the frame 52 include resins, metals, and composite materials thereof.

The frame 52 of FIGS. 17A and 17B is shaped to cover the lateral surface 12 of the filter pleat pack 1, the lateral surface 12 being closer to the end portion 11 where the strip-shaped body 7 is placed (in other words, the end portion 11 including the ventilation inhibiting portion 3 in the first air-permeable supporting layer 22).

The configuration of the air filter unit of the present invention is not limited to the above example as long as the air filter unit of the present invention includes the filter pleat pack 1.

The pressure drop of the air filter unit 51 is, for example, 10 to 1000 Pa, and may be 20 to 400 Pa, or even 50 to 200 Pa. The pressure drop of the air filter unit 51 can be determined according to the test method type 1 of the pressure loss test specified in Japanese Industrial Standards (JIS) B 9908: 2011.

The collection efficiency of the air filter unit 51 is, for example, 60 to 99.99999%, and may be 90 to 99.9999%, or even 99 to 99.999%. The collection efficiency of the air filter unit 51 can be evaluated under the following measurement conditions by the following measurement method according to a method specified in European Norm (EN) 1822-1: 2009. It should be noted that the collection efficiency determined using polydisperse PAO particles as test particles instead of the collection efficiency determined using particles having the most penetrating particle size (MPPS) is defined as the collection efficiency of the air filter unit.

- Test particles: polydisperse PAO particles
- Evaluation target particle size: 0.1 to 0.2 $\mu$m
- Upstream particle concentration: $1.0 \times 10^8$ particles/L or more
- Face velocity: $0.4 \pm 0.1$ m/sec

Following the methods as specified in EN 1822-1: 2009, the total number of PAO particles leaking to the downstream side of an opening area of the air filter unit is measured by scanning the air filter unit surface on the downstream side at 22 m/sec using a probe having a 50 mm $\times$ 10 mm opening portion for measurement. Next, the downstream particle concentration is determined from the measured total number of PAO particles. The collection efficiency of the air filter unit can be determined from the determined downstream particle concentration and the above upstream particle concentration by the following equation: collection efficiency (%) = [1- (downstream particle concentration/upstream particle concentration)] $\times$ 100. Both upstream and downstream particle concentrations refer to the concentrations of particles having a particle size in the evaluation target range.

The air filter unit 51 may be a unit including a high-efficiency particulate air grade (HEPA) filter or an ultra-low penetration air grade (ULPA) filter defined in JIS Z 8122: 2000.

EXAMPLES

The present invention will be described in more detail by examples. The present invention is not limited to embodiments shown in the embodiments given below.

[Production of porous PTFE membrane]

An amount of 100 parts by weight of a PTFE fine powder (POLYFLON PTFE F-104 manufactured by DAIKIN INDUSTRIES, LTD.) and 20 parts by weight of dodecane serving as a liquid lubricant were uniformly mixed to obtain a mixture. The obtained mixture was extrusion-molded into a rod shape using an extruder and then the rod was rolled by a pair of metal pressure rolls to obtain a PTFE sheet having a thickness of 200 $\mu$m. Next, the PTFE sheet obtained by the rolling was held in an atmosphere at 150°C to remove the liquid lubricant. After that, the PTFE sheet was stretched by roll stretching in the longitudinal direction at a stretching temperature of 280°C and a stretching ratio of 18 and was then stretched by tenter stretching in the width direction at a stretching temperature of 120°C and a stretching ratio of 35 to obtain an unsintered porous PTFE membrane. Then, the obtained porous membrane was sintered at 400°C in a hot-air furnace to obtain a strip-shaped porous PTFE membrane. The obtained porous PTFE membrane had a thickness of 1.0 $\mu$m, a pressure drop of 140 Pa, a collection efficiency (evaluation target particle size: 0.1 to 0.2 $\mu$m) of 99.995%, a PF value of 31.

[Preparation of air-permeable supporting layer]

A spunbond non-woven fabric (ELEVES S303WDO manufactured by UNITIKA LTD.) formed of a PET-PE composite fiber was prepared as an air-permeable supporting layer. This PET-PE composite fiber has a core-sheath structure composed of a PET core and a PE sheath. The air-permeable supporting layer had a thickness of 150 $\mu$m, a grammage of 30 g/m$^2$, a pressure drop of 0.1 Pa, a collection efficiency (evaluation target particle size: 0.3 to 0.5 $\mu$m) of 4.0%.

[Production of air filter medium]

A porous PTFE membrane produced as above and a pair of air-permeable supporting layers prepared as above were stacked such that the porous PTFE membrane was sandwiched between the pair of air-permeable supporting layers, and were subjected to thermal lamination using a roll at 130°C to obtain an air filter medium having a three-layer structure composed of "air-permeable supporting layer/porous PTFE membrane/air-permeable supporting layer".

(Example 1)

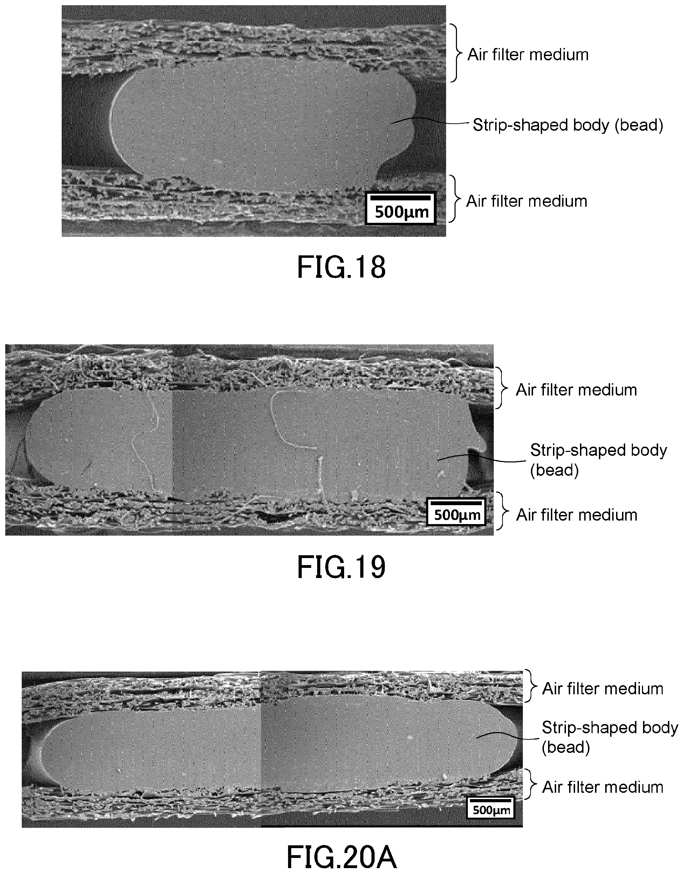

The method of FIG. 12 was performed on an air filter medium produced as above to obtain the filter pleat pack 1 (width: 50 mm; length: 100 mm; pleat height $H_0$: 15 mm; number of pleats: 5 pleats/cm), as shown in FIGS. 5A to 5C, including the strip-shaped body 7 being a bead in each end portion 11 in the width direction. A reciprocating pleating machine was used for pleating. The application width of the resin 41 applied in the first process was 1.5 mm and the application temperature thereof was 160°C. The resin 41 was applied to a surface of one of the air-permeable supporting layers of the air filter medium. A hot-melt resin (TECHNOMELT AS 3115 manufactured by Henkel AG & Co. KGaA) was used as the resin 41. FIG. 18 shows a SEM image of one of the strip-shaped bodies 7 of the produced filter pleat pack and its vicinity. The observation image of FIG. 18 shows the cross-section Y of the portion X of the strip-shaped body 7 viewed along the direction of the air flow 14. As shown in FIG. 18, from both of the pleat faces 26A and 26B in contact with the strip-shaped body 7, the strip-shaped body 7 permeated the air-permeable supporting layer to which the resin 41 had been applied, and reached the porous PTFE membrane. The strip-shaped body 7 evaluated from three observation images including the observation image of FIG. 18 has a width $W_0$ of 3.0 mm, a width $W_1$ of 2.3 mm, a ratio $W_1/W_0$ of 0.77, and a height-to-width ratio $H_0/W_0$ of 0.43. One side of the strip-shaped body 7 shown in the observation image of FIG. 18 does not have a recessed portion.

Next, the produced filter pleat pack was fitted in a frame such that the surface with the strip-shaped body 7 was on the downstream side in the direction of the air flow 19. A hot-melt resin was poured into a gap between the frame and each of the lateral surfaces of the filter pleat pack from the downstream side in the direction of the air flow 19 to join the filter pleat pack and the frame to each other only in the downstream regions of the end portions in the width direction, the lateral surfaces being closer to the end portions. An air filter unit as shown in FIGS. 17A and 17B was obtained in this manner. The collection efficiency of the produced air filter unit measured by the above method (the upstream particle concentration was $1.0 \times 10^8$ particles/L) was 99.99% or more.

(Example 2)

A filter pleat pack as shown in FIGS. 5A to 5C and an air filter unit as shown in FIGS. 17A and 17B were obtained in the same manner as in Example 1, except that the application temperature and the application width of the resin 41 were changed to 150°C and 2.5 mm, respectively. FIG. 19 shows a SEM image of one of the strip-shaped bodies 7 of the produced filter pleat pack and its vicinity. The observation image of FIG. 19 shows the cross-section Y of the portion X of the strip-shaped body 7 viewed along the direction of the air flow 14. As shown in FIG. 19, from both of the pleat faces 26A and 26B in contact with the strip-shaped body 7, the strip-shaped body 7 permeated the air-permeable supporting layer to which the resin 41 had been applied, and reached the porous PTFE membrane. The strip-shaped body 7 evaluated from three observation images including the observation image of FIG. 19 has a width $W_0$ of 5.0 mm, a width $W_1$ of 4.0 mm, a ratio $W_1/W_0$ of 0.8, and a height-to-width ratio $H_0/W_0$ of 0.23. One side of the strip-shaped body 7 shown in the observation image of FIG. 19 does not have a recessed portion. The collection efficiency of the produced air filter unit evaluated by the above method was 99.99% or more.

(Example 3)

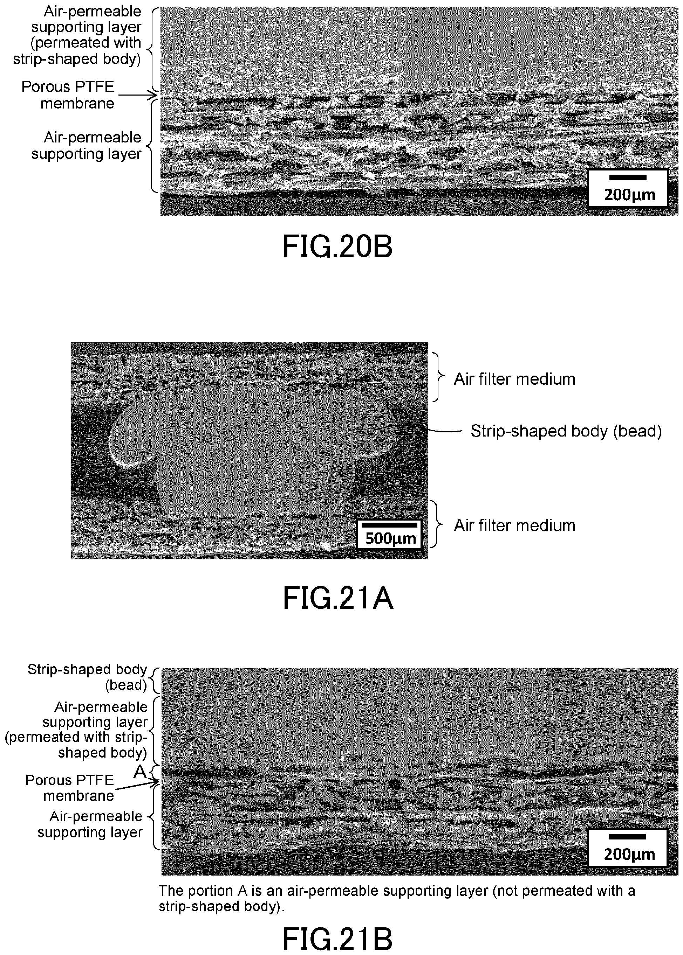

A filter pleat pack as shown in FIGS. 5A to 5C and an air filter unit as shown in FIGS. 17A and 17B were obtained in the same manner as in Example 1, except that the application width of the resin 41 was changed to 2.5 mm. FIG. 20A and 20B show SEM images of one of the strip-shaped bodies 7 of the produced filter pleat pack and its vicinity. The observation image of FIG. 20A shows the cross-section Y of the portion X of the strip-shaped body 7 viewed along the direction of the air flow 14. FIG. 20B shows an enlarged image of the observation image of FIG. 20A and shows a portion where the strip-shaped body 7 and the air filter medium 2 in are in contact with each other. As shown in FIGS. 20A and 20B, from both of the pleat faces 26A and 26B in contact with the strip-shaped body 7, the strip-shaped body 7 permeated the air-permeable supporting layer to which the resin 41 had been applied, and reached the porous PTFE membrane. The strip-shaped body 7 evaluated from three observation images including the observation image of FIG. 20A has a width $W_0$ of 7.0 mm, a width $W_1$ of 6.0 mm, a ratio $W_1/W_0$ of 0.86, and a height-to-width ratio $H_0/W_0$ of 0.15. Neither side of the strip-shaped body 7 shown in the observation image of FIG. 20A has a recessed portion. The collection efficiency of the produced air filter unit evaluated by the above method was 99.99% or more.

(Comparative Example 1)

A filter pleat pack and an air filter unit were obtained in the same manner as in Example 1, except that the application temperature of the resin 41 was changed to 140°C. FIG. 21A and 21B show SEM images of one of the strip-shaped bodies of the produced filter pleat pack and its vicinity. The observation image of FIG. 21A shows the cross-section Y of the portion X of the strip-shaped body 7 viewed along the direction of the airflow 14. FIG. 21B shows an enlarged view of the observation image of FIG. 21A and shows a portion where the strip-shaped body and the air filter medium 2 are in contact with each other. As shown in FIGS. 21A and 21B, the strip-shaped body permeated the air-permeable supporting layer to which the resin 41 had been applied, but did not reach the porous PTFE membrane. Moreover, the strip-shaped body shown in the observation image of FIG. 21A has a shape in which a portion which is derived from the resin 41A applied earlier and which almost perfectly keeps an original shape of the applied resin 41A and a portion which is derived from the resin 41B applied later and which was greatly deformed from an original shape of the applied resin 41B are joined to each other. The collection efficiency of the produced air filter unit evaluated by the above method was 99.9%.

(Comparative Example 2)

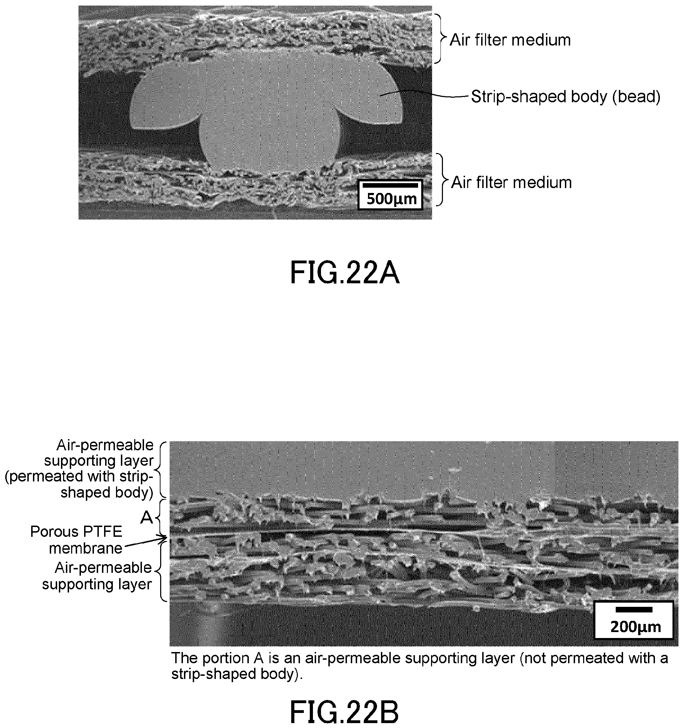

A filter pleat pack and an air filter unit were obtained in the same manner as in Example 1, except that the application temperature and the application width of the resin 41 were changed to 150°C and 1.0 mm, respectively. FIG. 22A and 22B show SEM images of one of the strip-shaped bodies of the produced filter pleat pack and its vicinity. The observation image of FIG. 22A shows the cross-section Y of the portion X of the strip-shaped body viewed along the direction of the air flow 14. FIG. 22B shows an enlarged view of the observation image of FIG. 22A and shows a portion where the strip-shaped body and the air filter medium 2 are in contact with each other. As shown in FIGS. 22A and 22B, the strip-shaped body permeated the air-permeable supporting layer to which the resin 41 had been applied, but did not reach the porous PTFE membrane. Moreover, the strip-shaped body shown in the observation image of FIG. 22A has a shape in which a portion which is derived from the resin 41A applied earlier and which almost perfectly keeps an original shape of the applied resin 41A and a portion which is derived from the resin 41B applied later and which was greatly deformed from an original shape of the applied resin 41B are joined to each other. The collection efficiency of the produced air filter unit evaluated by the above method was 99.9%.

(Reference Example)

An air filter unit was obtained by integrating a filter pleat pack as produced in Comparative Example 1 with a frame (having a rectangular opening with a width of 50 mm and a length of 100 mm) such that the surface with the strip-shaped bodies was on the downstream side and then applying a hot-melt resin to the entire lateral surfaces of the end portions of the filter pleat pack in the width direction to join the filter pleat pack and the frame to each other. The collection efficiency of the produced air filter unit evaluated by the above method was 99.99% or more.

The conditions for applying the resin 41 in the examples and the collection efficiencies of the air filter units of the examples were compiled in Table 1.

Table 1

| | | Example 1 | Example 2 | Example 3 | Comparative Example 1 | Comparative Example 2 | Reference Example |
|---|---|---|---|---|---|---|---|
| Resin | Application temperature (°C) | 160 | 150 | 160 | 140 | 150 | 140 |
| | Application width (mm) | 1.5 | 2.5 | 2.5 | 1.5 | 1.0 | 1.5 |
| Joining to frame in end portion | | Only on downstream side | | | | | Entirely |
| Collection efficiency (%) | | > 99.99 | > 99.99 | > 99.99 | 99.9 | 99.9 | > 99.99 |

As shown in Table 1, the collection efficiencies of Examples were able to be maintained at an equal level to that of Reference Example in which the filter pleat pack was integrated with the frame by applying the hot-melt resin to the entire lateral surfaces of the end portions of the filter pleat pack in the width direction. The collection efficiencies of Comparative Examples, on the other hand, were decreased, compared to that of Reference Example. It is thought that the decreased collection efficiencies of Comparative Examples are attributable to a side leak through a gap between the frame and each lateral surface of the end portion of the filter pleat pack in the width direction.

INDUSTRIAL APPLICABILITY

The filter pleat pack of the present invention can be used in the same applications as conventional filter pleat packs. Examples of the applications include air filter units.

**Claims**

1. A filter pleat pack comprising an air filter medium folded into pleats, wherein

the air filter medium includes a first porous fluorine resin membrane and a first air-permeable supporting layer, the first air-permeable supporting layer is placed on a downstream side in a direction of an air flow M that passes through the air filter medium with respect to the first porous fluorine resin membrane, the first air-permeable supporting layer includes a ventilation inhibiting portion in at least one of two end portions in a width direction, the ventilation inhibiting portion extending along the at least one end portion, the ventilation inhibiting portion being configured to inhibit ventilation in the width direction through the first air-permeable supporting layer, the width direction being a direction in which a pleat line of the air filter medium folded into pleats extends and

the ventilation inhibiting portion is in contact with the first porous fluorine resin membrane.

2. The filter pleat pack according to claim 1, wherein the ventilation inhibiting portion reaches a first surface of the first air-permeable supporting layer, the first surface being located farther from the first porous fluorine resin membrane.

3. The filter pleat pack according to claim 1 or 2, wherein the first air-permeable supporting layer includes the ventilation inhibiting portion in each of the two end portions in the width direction.

4. The filter pleat pack according to any one of claims 1 to 3, wherein

   a first resin permeates the first air-permeable supporting layer in the at least one end portion, and
   the ventilation inhibiting portion includes a portion of the first air-permeable supporting layer, the portion being permeated with the first resin.

5. The filter pleat pack according to any one of claims 1 to 4, wherein

   the first air-permeable supporting layer includes a thermally fused portion in the at least one end portion, and
   the ventilation inhibiting portion includes the thermally fused portion of the first air-permeable supporting layer.

6. The filter pleat pack according to any one of claims 1 to 3, wherein

   the filter pleat pack includes, in at least one of end portions of the filter pleat pack in the width direction, a strip-shaped body extending along the at least one end portion,
   the strip-shaped body includes a first resin,
   the strip-shaped body is placed on a second surface of the air filter medium, the second surface being closer to the first air-permeable supporting layer,
   the strip-shaped body permeates from the second surface into the first air-permeable supporting layer to reach the first porous fluorine resin membrane, and
   the ventilation inhibiting portion includes a portion of the first air-permeable supporting layer, the portion being permeated with the strip-shaped body.

7. The filter pleat pack according to claim 6, wherein

   a ratio $W_1/W_0$ is 0.6 or more in a cross-section of a portion included in the strip-shaped body and located, when viewed along a direction in which an air flow P that passes through the filter pleat pack flows, between an upstream valley fold of the folded air filter medium and a plane in contact with two downstream valley folds adjacent to the upstream valley fold along the air filter medium,
   where $W_0$ is a length of the strip-shaped body in the width direction in the cross-section, and $W_1$ is a length of a portion of the strip-shaped body in the width direction in the cross-section, the portion being in contact with the first porous fluorine resin membrane.

8. The filter pleat pack according to claim 6 or 7, wherein
   in a cross-section of a portion included in the strip-shaped body and located, when viewed along a direction in which an air flow P that passes through the filter pleat pack flows, between an upstream valley fold of the folded air filter medium and a plane in contact with two downstream valley folds adjacent to the upstream valley fold along the air filter medium, a length $W_1$ of a portion of the strip-shaped body in the width direction is 1.0 mm or more, the portion being in contact with the first porous fluorine resin membrane.

9. The filter pleat pack according to any one of claims 6 to 8, wherein the strip-shaped body is a bead of the filter pleat pack.

10. The filter pleat pack according to any one of claims 4 and 6 to 8, wherein the first resin is a hot-melt resin.

11. The filter pleat pack according to any one of claims 1 to 10, wherein when at least one end portion of the filter pleat pack in the width direction is viewed along the width direction, a second resin is placed to fill a region between faces of the air filter medium, the faces facing to each other on the downstream side in the direction of the air flow M, the at least one end portion including the ventilation inhibiting portion in the first air-permeable supporting layer.

**12.** The filter pleat pack according to claim 11, wherein when at least one end portion of the filter pleat pack in the width direction is viewed along the width direction, the second resin is placed to fill the region from a valley fold located on an upstream side in a direction of an air flow P that passes through the filter pleat pack to 50% or more of an inter-valley-fold height, the at least one end portion including the ventilation inhibiting portion in the first air-permeable supporting layer.

**13.** The filter pleat pack according to claim 11 or 12, wherein the second resin is a hot-melt resin.

**14.** The filter pleat pack according to any one of claims 1 to 13, wherein

the air filter medium further includes a second air-permeable supporting layer, and
the first porous fluorine resin membrane is sandwiched between the first air-permeable supporting layer and the second air-permeable supporting layer.

**15.** The filter pleat pack according to any one of claims 1 to 14, wherein

the air filter medium further includes a second porous fluorine resin membrane, and
of all porous fluorine resin membranes of the air filter medium, the first porous fluorine resin membrane is located on a most downstream side in the direction of the air flow M.

**16.** The filter pleat pack according to any one of claims 1 to 15, wherein the first porous fluorine resin membrane is a porous polytetrafluoroethylene membrane.

**17.** An air filter unit comprising:

a filter pleat pack; and
a frame supporting the filter pleat pack, wherein
the filter pleat pack is the filter pleat pack according to any one of claims 1 to 16.

**18.** The air filter unit according to claim 17, wherein at least one end portion of the filter pleat pack in the width direction is joined to the frame in a region of the at least one end portion on a downstream side in a direction of an air flow F that passes through the air filter unit, the at least one end portion including the ventilation inhibiting portion in the first air-permeable supporting layer.

**19.** The air filter unit according to claim 18, wherein a region of the at least one end portion on an upstream side in the direction of the air flow F is not joined to the frame.

**20.** The air filter unit according to any one of claims 17 to 19, wherein the frame is shaped to cover a lateral surface of the filter pleat pack, the lateral surface being closer to an end portion of the filter pleat pack in the width direction, the end portion including the ventilation inhibiting portion in the first air-permeable supporting layer.

EP 4 238 635 A1

FIG.1A

FIG.1B

FIG.1C

FIG.2

FIG.3

FIG.4A

12

25 (25B)

2

23 21 22

L

Upstream side

3 (3A)

302

H

H₀

2

25 (25A)

Downstream side

# FIG.4B

FIG.5A

FIG.5B

FIG.5C

FIG.6

FIG.7

FIG.8

FIG.9

FIG.10

FIG.11

FIG.12

FIG.13

FIG.14

FIG.15

FIG.16

## FIG.17A

## FIG.17B

Air filter medium

Strip-shaped body (bead)

500µm

Air filter medium

FIG.18

Air filter medium

Strip-shaped body (bead)

500µm

Air filter medium

FIG.19

Air filter medium

Strip-shaped body (bead)

Air filter medium

500µm

FIG.20A

Air-permeable supporting layer (permeated with strip-shaped body)

Porous PTFE membrane

Air-permeable supporting layer

200µm

## FIG.20B

Air filter medium

Strip-shaped body (bead)

Air filter medium

500µm

## FIG.21A

Strip-shaped body (bead)

Air-permeable supporting layer (permeated with strip-shaped body)

Porous PTFE membrane

Air-permeable supporting layer

A

200µm

The portion A is an air-permeable supporting layer (not permeated with a strip-shaped body).

## FIG.21B

Air filter medium

Strip-shaped body (bead)

Air filter medium

500µm

FIG.22A

Air-permeable supporting layer (permeated with strip-shaped body)

A

Porous PTFE membrane

Air-permeable supporting layer

200µm

The portion A is an air-permeable supporting layer (not permeated with a strip-shaped body).

FIG.22B

| | **INTERNATIONAL SEARCH REPORT** | International application No. |
|---|---|---|
| | | **PCT/JP2021/039689** |

**A. CLASSIFICATION OF SUBJECT MATTER**

*B01D 63/14*(2006.01)i; *B01D 39/16*(2006.01)i; *B01D 46/52*(2006.01)i; *B01D 63/00*(2006.01)i; *B01D 71/36*(2006.01)i
FI: B01D63/14; B01D63/00 500; B01D71/36; B01D46/52 A; B01D39/16 C

According to International Patent Classification (IPC) or to both national classification and IPC

**B. FIELDS SEARCHED**

Minimum documentation searched (classification system followed by classification symbols)

B01D63/14; B01D39/16; B01D46/52; B01D63/00; B01D71/36

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2013/014828 A1 (NITTO DENKO CORPORATION) 31 January 2013 (2013-01-31) claims, paragraphs [0015], [0020], [0030]-[0031], [0036], [0042], [0045]-[0047], [0062]-[0063] | 1-3, 5, 14-17, 20 |
| Y | | 4-20 |
| Y | WO 2017/150027 A1 (SMC CORP) 08 September 2017 (2017-09-08) claims, paragraph [0013] | 4-20 |
| Y | JP 8-266843 A (TORAY IND INC) 15 October 1996 (1996-10-15) paragraph [0034], fig. 7(a)-(c) | 4-20 |
| Y | JP 8-89737 A (JAPAN VILENE CO LTD) 09 April 1996 (1996-04-09) claim 1, paragraphs [0011], [0015], [0017], fig. 1-4 | 6-20 |
| Y | JP 2020-93197 A (TOYOTA BOSHOKU CORP) 18 June 2020 (2020-06-18) paragraphs [0018], [0021], [0026]-[0029], [0043], fig. 1-3 | 6-20 |
| A | JP 10-156121 A (MATSUSHITA SEIKO CO LTD) 16 June 1998 (1998-06-16) | 1-20 |

✓ Further documents are listed in the continuation of Box C.     ✓ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 December 2021** | **11 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

<table>
<tr><td colspan="3"><b>INTERNATIONAL SEARCH REPORT</b></td><td>International application No.<br><b>PCT/JP2021/039689</b></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | JP 2019-531880 A (3M INNOVATIVE PROPERTIES COMPANY) 07 November 2019 (2019-11-07) | 1-20 |
| A | JP 2002-58943 A (BRIDGESTONE CORP) 26 February 2002 (2002-02-26) | 1-20 |

Form PCT/ISA/210 (second sheet) (January 2015)

| INTERNATIONAL SEARCH REPORT | | | International application No. | |
| --- | --- | --- | --- | --- |
| Information on patent family members | | | **PCT/JP2021/039689** | |

| Patent document cited in search report | Publication date (day/month/year) | Patent family member(s) | Publication date (day/month/year) |
| --- | --- | --- | --- |
| WO 2013/014828 A1 | 31 January 2013 | (Family: none) | |
| WO 2017/150027 A1 | 08 September 2017 | US 2019/0054410 A1 claims, paragraphs [0056]-[0057] CN 108712926 A KR 10-2018-0118120 A JP 2017-154071 A | |
| JP 8-266843 A | 15 October 1996 | (Family: none) | |
| JP 8-89737 A | 09 April 1996 | (Family: none) | |
| JP 2020-93197 A | 18 June 2020 | (Family: none) | |
| JP 10-156121 A | 16 June 1998 | (Family: none) | |
| JP 2019-531880 A | 07 November 2019 | US 2019/0299035 A1 WO 2018/038976 A1 EP 3503991 A1 CN 109641169 A KR 10-2019-0037343 A | |
| JP 2002-58943 A | 26 February 2002 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014198313 A